# EUROPEAN PATENT APPLICATION

(11) **EP 3 144 809 A1**
(43) Date of publication of application: **22.03.2017**
(21) Application number: 16180911.6
(22) Date of filing: 22.07.2016
(51) Int. Cl.: G06F 9/44, G06F 9/54, G06Q 30/00

(54) **METHOD AND APPARATUS FOR DISPLAYING MULTIMEDIA INFORMATION**

(30) Priority: 13.08.2015 CN 201510496923
(71) Applicant: Xiaomi Inc., Beijing 100085 (CN)
(72) Inventor: LIU, Hongjie, Haidian District, Beijing 100085 (CN); LONG, Hai, Haidian District, Beijing 100085 (CN); YUAN, Jun, Haidian District, Beijing 100085 (CN)
(74) Representative: Reeve, Nicholas Edward

(57) **Abstract**

Method and apparatus for displaying multimedia information are provided in the disclosure, which belong to computer technology. The method may be applied to a launch management application client launching multimedia information to other application clients than the launch management application client, and include: determining (101) multimedia information which is to be launched in a first application client based on a predefined launch strategy and a set of multimedia information, wherein the set of multimedia information comprises at least one piece of multimedia information; and sending (102) the multimedia information to the first application client, so that the first application client, upon reception of the multimedia information, displays the multimedia information. By uniformly managing each installed application client, it is not necessary for each application client to download the multimedia information from an application server individually, thus saving network resource and power of the terminal.

## Description

### FIELD

The present disclosure generally relates to computer technology, and more particularly to a method and apparatus for displaying multimedia information.

### BACKGROUND

With the development of intelligent terminals, application clients of the terminals are becoming more and more popular. Opening advertisements refer to the advertisements displayed on the start-up interface when starting up an application client. Displaying opening advertisements in the application client are becoming a common way of displaying advertisements.

Traditionally, an application server associated with the application client may pre-obtain a plurality of opening advertisements provided by advertisers and set a launch strategy of the opening advertisements. The application server may provide the opening advertisements which are to be launched in the application client based on the launch strategy. The application client on the terminal may invoke an interface with the application server to download the opening advertisements. When the application client is started up, the opening advertisements may be displayed.

For the terminal, a plurality of application clients installed on the terminal may use the above method to display corresponding opening advertisements without interferences between the application clients.

### SUMMARY OF THE INVENTION

According to a first aspect of the present disclosure, a method for displaying multimedia information in a launch management application client is provided, the launch management application client launching multimedia information to other application clients than the launch management application client, the method comprising: determining multimedia information which is to be launched in a first application client based on a predefined launch strategy and a set of multimedia information, wherein the set of multimedia information comprises at least one piece of multimedia information; and sending the multimedia information to the first application client, so that the first application client, upon reception of the multimedia information, displays the multimedia information.

In an exemplary embodiment, before the determining multimedia information which is to be launched in a first application client based on a predefined launch strategy and a set of multimedia information, the method further comprises: receiving a request to display multimedia information sent by the first application client which is currently running, wherein the request to display multimedia information is triggered by a predefined event occurred in the first application client.

In an exemplary embodiment, the method further comprises: downloading the launch strategy and the set of multimedia information by invoking an interface with a server, or otherwise calling the server to obtain the data.

In an exemplary embodiment, the determining multimedia information which is to be launched in a first application client based on a predefined launch strategy and a set of multimedia information comprises: when the launch strategy comprises a list of applications to which multimedia information should be launched, determining whether the list of applications comprises the first application client; and when the list of applications comprises the first application client, determining the multimedia information which is to be launched in the first application client based on the launch strategy and the set of multimedia information.

In an exemplary embodiment, the determining multimedia information which is to be launched in a first application client based on a predefined launch strategy and a set of multimedia information comprises: when the launch strategy comprises a launch period of time for the first application client, obtaining a current system time indicated by a clock; determining whether the system time is in the launch period of time; and when the system time is in the launch period of time, determining the multimedia information which is to be launched in the first application client based on the launch strategy and the set of multimedia information.

In an exemplary embodiment, the determining multimedia information which is to be launched in a first application client based on a predefined launch strategy and a set of multimedia information comprises: when the launch strategy comprises a first launch frequency, calculating a total launch frequency based on launch frequency of each application client on a terminal, wherein the first launch frequency indicates launch frequency of the terminal; and when the total launch frequency is less than the first launch frequency, determining the multimedia information which is to be launched in the first application client based on the launch strategy and the set of multimedia information.

In an exemplary embodiment, the determining multimedia information which is to be launched in a first application client based on a predefined launch strategy and a set of multimedia information comprises: when the launch strategy comprises specified multimedia information corresponding to the first application client, obtaining the specified multimedia information from the set of multimedia information.

In an exemplary embodiment, the determining multimedia information which is to be launched in a first application client based on a predefined launch strategy and a set of multimedia information comprises: when the launch strategy comprises multiple pieces of specified multimedia information corresponding to the first application client and a second launch frequency of each piece of specified multimedia information, obtaining launch frequency for each piece of specified multimedia information corresponding to the first application client, wherein the second launch frequency indicates the launch frequency of the corresponding specified multimedia information; and when the launch frequency of the specified multimedia information is less than the corresponding second launch frequency, determining the specified multimedia information as the multimedia information which is to be launched in the first application client.

In an exemplary embodiment, the determining multimedia information which is to be launched in a first application client based on a predefined launch strategy and a set of multimedia information comprises: obtaining a current weight of each piece of multimedia information in the set of multimedia information, wherein the weight indicates a probability of a corresponding multimedia information being selected; and selecting the multimedia information which is to be launched in the first application client from the set of multimedia information in a descending order of the current weight of each piece of multimedia information.

According to a second aspect of embodiments of the present disclosure, a method for displaying multimedia information in a first application client is provided, comprising: sending a request to display multimedia information to a launch management application client upon detection of a predefined event, wherein the first application client corresponds to at least one predefined event, and the launch management application client launches multimedia information to other application clients than the launch management application client; and displaying the multimedia information upon reception of the multimedia information sent by the launch management application client.

In an exemplary embodiment, the predefined event corresponding to a lock screen application client comprises a lock screen event; the predefined event corresponding to a display application client comprises a pop-up window event; and the predefined event corresponding to a battery charging application client comprises a battery charging event under power-off state.

In an exemplary embodiment, the displaying the multimedia information comprises: if the first application client is the lock screen application client, displaying the multimedia information on a lock screen interface; or if the first application client is the display application client, displaying the multimedia information on display area in a current scene interface except the pop-up window; or if the first application client is the battery charging application client, displaying the multimedia information in a battery charging interface.

According to a third aspect of the present disclosure, a method for displaying multimedia information in a server is provided, the server launching multimedia information to an application client of a terminal, the method comprising: determining multimedia information which is to be launched in a first application client based on a predefined launch strategy and a set of multimedia information, wherein the set of multimedia information comprises at least one piece of multimedia information; and sending the multimedia information to the first application client, so that the first application client, upon reception of the multimedia information, displays the multimedia information.

In an exemplary embodiment, before the determining multimedia information which is to be launched in a first application client based on a predefined launch strategy and a set of multimedia information, the method further comprises: receiving a request to display multimedia information sent by the first application client which is currently running on the terminal, wherein the request to display multimedia information is triggered by a predefined event occurred in the first application client.

In an exemplary embodiment, the determining multimedia information which is to be launched in a first application client based on a predefined launch strategy and a set of multimedia information comprises: when the launch strategy comprises a list of applications to which multimedia information should be launched, determining whether the list of applications comprises the first application client; and when the list of applications comprises the first application client, determining the multimedia information which is to be launched in the first application client based on the launch strategy and the set of multimedia information.

In an exemplary embodiment, the determining multimedia information which is to be launched in a first application client based on a predefined launch strategy and a set of multimedia information comprises: when the launch strategy comprises a launch period of time for the first application client, obtaining a current system time indicated by a clock; determining whether the system time is in the launch period of time; and when the system time is in the launch period of time, determining the multimedia information which is to be launched in the first application client based on the launch strategy and the set of multimedia information.

In an exemplary embodiment, the determining multimedia information which is to be launched in a first application client based on a predefined launch strategy and a set of multimedia information comprises: when the launch strategy comprises a first launch frequency, calculating a total launch frequency based on launch frequency of each application client on the terminal, wherein the first launch frequency indicates launch frequency of the terminal; and when the total launch frequency is less than the first launch frequency, determining the multimedia information which is to be launched in the first application client based on the launch strategy and the set of multimedia information.

In an exemplary embodiment, the determining multimedia information which is to be launched in a first application client based on a predefined launch strategy and a set of multimedia information comprises: when the launch strategy comprises specified multimedia information corresponding to the first application client, obtaining the specified multimedia information from the set of multimedia information.

In an exemplary embodiment, the determining multimedia information which is to be launched in a first application client based on a predefined launch strategy and a set of multimedia information comprises: when the launch strategy comprises multiple pieces of specified multimedia information corresponding to the first application client and a second launch frequency of each piece of specified multimedia information, obtaining launch frequency for each piece of specified multimedia information corresponding to the first application client, wherein the second launch frequency indicates the launch frequency of the corresponding specified multimedia information; and when the launch frequency of the specified multimedia information is less than the corresponding second launch frequency, determining the specified multimedia information as the multimedia information which is to be launched in the first application client.

In an exemplary embodiment, the determining multimedia information which is to be launched in a first application client based on a predefined launch strategy and a set of multimedia information comprises: obtaining a current weight of each piece of multimedia information in the set of multimedia information, wherein the weight indicates a probability of a corresponding multimedia information being selected; and selecting the multimedia information which is to be launched in the first application client from the set of multimedia information in a descending order of the current weight of each piece of multimedia information.

According to a fourth aspect of embodiments of the present disclosure, a method for displaying multimedia information in a first application client is provided, comprising: sending a request to display multimedia information to a server upon detection of a predefined event, wherein the first application client corresponds to at least one predefined event, and the server launches multimedia information to an application client of a terminal; and displaying the multimedia information upon reception of the multimedia information sent by the server.

In an exemplary embodiment, the predefined event corresponding to a lock screen application client comprises a lock screen event; the predefined event corresponding to a display application client comprises a pop-up window event; and the predefined event corresponding to a battery charging application client comprises a battery charging event under power-off state.

In an exemplary embodiment, the displaying the multimedia information comprises: if the first application client is the lock screen application client, displaying the multimedia information on a lock screen interface; or if the first application client is the display application client, displaying the multimedia information on display area in a current scene interface except the pop-up window; or if the first application client is the battery charging application client, displaying the multimedia information in a battery charging interface.

According to a fifth aspect of the present disclosure, an apparatus for displaying multimedia information in a launch management application client is provided, the launch management application client launching multimedia information to other application clients than the launch management application client, the apparatus comprising: an information determination module configured to determine multimedia information which is to be launched in a first application client based on a predefined launch strategy and a set of multimedia information, wherein the set of multimedia information comprises at least one piece of multimedia information; and a sending module configured to send the multimedia information to the first application client, so that the first application client, upon reception of the multimedia information, displays the multimedia information.

In an exemplary embodiment, the apparatus further comprises: a receiving module configured to receive a request to display multimedia information sent by the first application client which is currently running, wherein the request to display multimedia information is triggered by a predefined event occurred in the first application client.

In an exemplary embodiment, the apparatus further comprises: a downloading module configured to download the launch strategy and the set of multimedia information by invoking an interface with a server.

In an exemplary embodiment, the information determination module is further configured to: when the launch strategy comprises a list of applications to which multimedia information should be launched, determine whether the list of applications comprises the first application client; and when the list of applications comprises the first application client, determine the multimedia information which is to be launched in the first application client based on the launch strategy and the set of multimedia information.

In an exemplary embodiment, the information determination module is further configured to: when the launch strategy comprises a launch period of time for the first application client, obtain a current system time indicated by a clock; determine whether the system time is in the launch period of time; and when the system time is in the launch period of time, determine the multimedia information which is to be launched in the first application client based on the launch strategy and the set of multimedia information.

In an exemplary embodiment, the information determination module is further configured to: when the launch strategy comprises a first launch frequency, calculate a total launch frequency based on launch frequency of each application client on a terminal, wherein the first launch frequency indicates launch frequency of the terminal; and when the total launch frequency is less than the first launch frequency, determine the multimedia information which is to be launched in the first application client based on the launch strategy and the set of multimedia information.

In an exemplary embodiment, the information determination module is further configured to: when the launch strategy comprises specified multimedia information corresponding to the first application client, obtain the specified multimedia information corresponding to the first application client from the set of multimedia information.

In an exemplary embodiment, the information determination module is further configured to: when the launch strategy comprises multiple pieces of specified multimedia information corresponding to the first application client and a second launch frequency of each piece of specified multimedia information, obtain launch frequency for each piece of specified multimedia information corresponding to the first application client, wherein the second launch frequency indicates the launch frequency of the corresponding specified multimedia information; and when the launch frequency of the specified multimedia information is less than the corresponding second launch frequency, determine the specified multimedia information as the multimedia information which is to be launched in the first application client.

In an exemplary embodiment, the information determination module is further configured to: obtain a current weight of each piece of multimedia information in the set of multimedia information, wherein the weight indicates a probability of a corresponding multimedia information being selected; and select the multimedia information which is to be launched in the first application client from the set of multimedia information in a descending order of the current weight of each piece of multimedia information.

According to a sixth aspect of embodiments of the present disclosure, an apparatus for displaying multimedia information in a first application client is provided, comprising: a sending module configured to send a request to display multimedia information to a launch management application client upon detection of a predefined event, wherein the first application client corresponds to at least one predefined event, and the launch management application client launches multimedia information to other application clients than the launch management application client; and a display module configured to display the multimedia information upon reception of the multimedia information sent by the launch management application client.

In an exemplary embodiment, the predefined event corresponding to a lock screen application client comprises a lock screen event; the predefined event corresponding to a display application client comprises a pop-up window event; and the predefined event corresponding to a battery charging application client comprises a battery charging event under power-off state.

In an exemplary embodiment, the display module comprises: a first display module configured to display the multimedia information on a lock screen interface if the first application client is the lock screen application client; or a second display module configured to display the multimedia information on display area in a current scene interface except the pop-up window if the first application client is the display application client; or a third display module configured to display the multimedia information in a battery charging interface if the first application client is the battery charging application client.

According to a seventh aspect of the present disclosure, an apparatus for displaying multimedia information in a server is provided, the server launching multimedia information to an application client of a terminal, the apparatus comprising: an information determination module configured to determine multimedia information which is to be launched in a first application client based on a predefined launch strategy and a set of multimedia information, wherein the set of multimedia information comprises at least one piece of multimedia information; and a sending module configured to send the multimedia information to the first application client, so that the first application client, upon reception of the multimedia information, displays the multimedia information.

In an exemplary embodiment, the apparatus further comprises: a receiving module configured to receive a request to display multimedia information sent by the first application client which is currently running on the terminal, wherein the request to display multimedia information is triggered by a predefined event occurred in the first application client.

In an exemplary embodiment, the information determination module is further configured to: when the launch strategy comprises a list of applications to which multimedia information should be launched, determine whether the list of applications comprises the first application client; and when the list of applications comprises the first application client, determine the multimedia information which is to be launched in the first application client based on the launch strategy and the set of multimedia information.

In an exemplary embodiment, the information determination module is further configured to: when the launch strategy comprises a launch period of time for the first application client, obtain a current system time indicated by a clock; determine whether the system time is in the launch period of time; and when the system time is in the launch period of time, determine the multimedia information which is to be launched in the first application client based on the launch strategy and the set of multimedia information.

In an exemplary embodiment, the information determination module is further configured to: when the launch strategy comprises a first launch frequency, calculate a total launch frequency based on launch frequency of each application client on the terminal, wherein the first launch frequency indicates launch frequency of the terminal; and when the total launch frequency is less than the first launch frequency, determine the multimedia information which is to be launched in the first application client based on the launch strategy and the set of multimedia information.

In an exemplary embodiment, the information determination module is further configured to: when the launch strategy comprises specified multimedia information corresponding to the first application client, obtain the specified multimedia information corresponding to the first application client from the set of multimedia information.

In an exemplary embodiment, the information determination module is further configured to: when the launch strategy comprises multiple pieces of specified multimedia information corresponding to the first application client and a second launch frequency of each piece of specified multimedia information, obtain launch frequency for each piece of specified multimedia information corresponding to the first application client, wherein the second launch frequency indicates the launch frequency of the corresponding specified multimedia information; and when the launch frequency of the specified multimedia information is less than the corresponding second launch frequency, determine the specified multimedia information as the multimedia information which is to be launched in the first application client.

In an exemplary embodiment, the information determination module is further configured to: obtain a current weight of each piece of multimedia information in the set of multimedia information, wherein the weight indicates a probability of a corresponding multimedia information being selected; and select the multimedia information which is to be launched in the first application client from the set of multimedia information in a descending order of the current weight of each piece of multimedia information.

According to an eighth aspect of embodiments of the present disclosure, an apparatus for displaying multimedia information in a first application client is provided, comprising: a sending module configured to send a request to display multimedia information to a server upon detection of a predefined event, wherein the first application client corresponds to at least one predefined event, and the server launches multimedia information to an application client of a terminal; and a display module configured to display the multimedia information upon reception of the multimedia information sent by the server.

In an exemplary embodiment, the predefined event corresponding to a lock screen application client comprises a lock screen event; the predefined event corresponding to a display application client comprises a pop-up window event; and the predefined event corresponding to a battery charging application client comprises a battery charging event under power-off state.

In an exemplary embodiment, the display module comprises: a first display module configured to display the multimedia information on a lock screen interface if the first application client is the lock screen application client; or a second display module configured to display the multimedia information on display area in a current scene interface except the pop-up window if the first application client is the display application client; or a third display module configured to display the multimedia information in a battery charging interface if the first application client is the battery charging application client.

According to a ninth aspect of embodiments of the present disclosure, an apparatus for displaying multimedia information in a launch management application client is provided, the launch management application client launching multimedia information to other application clients than the launch management application client, the apparatus comprising: a processor; and a memory for storing processor-executable instructions, wherein the processor is configured to: determine multimedia information which is to be launched in a first application client based on a predefined launch strategy and a set of multimedia information, wherein the set of multimedia information comprises at least one piece of multimedia information; and send the multimedia information to the first application client, so that the first application client, upon reception of the multimedia information, displays the multimedia information.

According to a tenth aspect of embodiments of the present disclosure, an apparatus for displaying multimedia information in a first application client is provided, comprising: a processor; and a memory for storing processor-executable instructions, wherein the processor is configured to: send a request to display multimedia information to a launch management application client upon detection of a predefined event, wherein the first application client corresponds to at least one predefined event, and the launch management application client launches multimedia information to other application clients than the launch management application client; and display the multimedia information upon reception of the multimedia information sent by the launch management application client.

According to an eleventh aspect of embodiments of the present disclosure, an apparatus for displaying multimedia information in a server is provided, the server launching multimedia information to an application client of a terminal, the apparatus comprising: a processor; and a memory for storing processor-executable instructions, wherein the processor is configured to: determine multimedia information which is to be launched in a first application client based on a predefined launch strategy and a set of multimedia information, wherein the set of multimedia information comprises at least one piece of multimedia information; and send the multimedia information to the first application client, so that the first application client, upon reception of the multimedia information, displays the multimedia information.

According to a twelfth aspect of embodiments of the present disclosure, an apparatus for displaying multimedia information in a first application client is provided, comprising: a processor; and a memory for storing processor-executable instructions, wherein the processor is configured to: send a request to display multimedia information to a server upon detection of a predefined event, wherein the first application client corresponds to at least one predefined event, and the server launches multimedia information to an application client of a terminal; and display the multimedia information upon reception of the multimedia information sent by the server.

The technical solutions provided in the present disclosure may include the following benefits.

In an exemplary embodiment of the present disclosure, a method for displaying multimedia is provided, comprising: determining multimedia information which is to be launched in a first application client based on a predefined launch strategy and a set of multimedia information, wherein the set of multimedia information comprises at least one piece of multimedia information; and sending the multimedia information to the first application client, so that the first application client, upon reception of the multimedia information, displays the multimedia information. By uniformly managing each installed application client, it is not necessary for each application client to download the multimedia information from an application server individually, therefore, it is avoided to download the same multimedia information repeatedly, thus saving network resource and power of the terminal.

In an exemplary embodiment, before the determining multimedia information which is to be launched in a first application client based on a predefined launch strategy and a set of multimedia information, the method further comprises: receiving a request to display multimedia information sent by the first application client which is currently running, wherein the request to display multimedia information is triggered by a predefined event occurred in the first application client. By launching the multimedia information to the first application client when the predefined event occurs rather than launching the multimedia information only when the application client is started up, it can expand the manners to launch the multimedia information, thus improving flexibility.

In an exemplary embodiment, the method further comprises: downloading the launch strategy and the set of multimedia information by invoking an interface with a server. It only needs the server to set the launch strategy and the set of multimedia information and it is not necessary for multiple application servers to set the launch strategy and the set of multimedia information, respectively. It only needs to download one copy of the launch strategy and the set of multimedia information and it is not necessary for each application client to download the multimedia information from the application server individually, therefore it is avoided downloading the same multimedia information repeatedly, thus saving network resource and power of the terminal.

In an exemplary embodiment, the determining multimedia information which is to be launched in a first application client based on a predefined launch strategy and a set of multimedia information comprises: when the launch strategy comprises a list of applications to which multimedia information should be launched, determining whether the list of applications comprises the first application client; and when the list of applications comprises the first application client, determining the multimedia information which is to be launched in the first application client based on the launch strategy and the set of multimedia information. By using the list of applications to manage the application client which triggers launching the multimedia information, it can improve flexibility.

In an exemplary embodiment, the determining multimedia information which is to be launched in a first application client based on a predefined launch strategy and a set of multimedia information comprises: when the launch strategy comprises a launch period of time for the first application client, obtaining a current system time indicated by a clock; determining whether the system time is in the launch period of time; and when the system time is in the launch period of time, determining the multimedia information which is to be launched in the first application client based on the launch strategy and the set of multimedia information. By setting the launch period of time for the first application client, it can be ensured to launch multimedia information to the first application client within the launch period of time and no longer to launch multimedia information to the first application client beyond the launch period of time, thus avoiding interrupting the user beyond the launch period of time.

In an exemplary embodiment, the determining multimedia information which is to be launched in a first application client based on a predefined launch strategy and a set of multimedia information comprises: when the launch strategy comprises a first launch frequency, calculating a total launch frequency based on launch frequency of each application client on a terminal, wherein the first launch frequency indicates launch frequency of the terminal; and when the total launch frequency is less than the first launch frequency, determining the multimedia information which is to be launched in the first application client based on the launch strategy and the set of multimedia information. By setting the first launch frequency to restrict the frequency at which the terminal displays the multimedia information, it can be avoided disgusting the user due to displaying excessive multimedia information.

In an exemplary embodiment, determining multimedia information which is to be launched in a first application client based on a predefined launch strategy and a set of multimedia information comprises: when the launch strategy comprises specified multimedia information corresponding to the first application client, obtaining the specified multimedia information from the set of multimedia information. In the present disclosure, it is to manage the multimedia information which is to be launched in the first application client by determining the specified multimedia information corresponding to the first application client.

In an exemplary embodiment, the determining multimedia information which is to be launched in a first application client based on a predefined launch strategy and a set of multimedia information comprises: when the launch strategy comprises multiple pieces of specified multimedia information corresponding to the first application client and a second launch frequency of each piece of specified multimedia information, obtaining launch frequency for each piece of specified multimedia information corresponding to the first application client, wherein the second launch frequency indicates the launch frequency of the corresponding specified multimedia information; and when the launch frequency of the specified multimedia information is less than the corresponding second launch frequency, determining the specified multimedia information as the multimedia information which is to be launched in the first application client. In the present disclosure, it is to manage the multimedia information which is to be launched in the first application client based on the launch frequency of each piece of specified multimedia information by determining multiple pieces of specified multimedia information corresponding to the first application client.

In an exemplary embodiment, the determining multimedia information which is to be launched in a first application client based on a predefined launch strategy and a set of multimedia information comprises: obtaining a current weight of each piece of multimedia information in the set of multimedia information, wherein the weight indicates a probability of a corresponding multimedia information being selected; and selecting the multimedia information which is to be launched in the first application client from the set of multimedia information in a descending order of the current weight of each piece of multimedia information. By setting the weight of multimedia information and launching the multimedia information with the greater weight rather than launching the multimedia information randomly, it can launch various multimedia information evenly, thus avoiding launching too much for a piece of multimedia information while too little for another piece of multimedia information.

In an exemplary embodiment of the present disclosure, a method for displaying multimedia is provided, comprising: sending a request to display multimedia information to a launch management application client upon detection of a predefined event, wherein the first application client corresponds to at least one predefined event, and the launch management application client launches multimedia information to other application clients than the launch management application client; and displaying the multimedia information upon reception of the multimedia information sent by the launch management application client. By uniformly managing each installed application client, it is not necessary for each application client to download the multimedia information from an application server individually, therefore, it is avoided to download the same multimedia information repeatedly, thus saving network resource and power of the terminal.

In an exemplary embodiment, the predefined event corresponding to a lock screen application client comprises a lock screen event; the predefined event corresponding to a display application client comprises a pop-up window event; and the predefined event corresponding to a battery charging application client comprises a battery charging event under power-off state. In the present disclosure, the predefined events corresponding to different types of application clients are provided.

In an exemplary embodiment, displaying the multimedia information comprises: if the first application client is the lock screen application client, displaying the multimedia information on a lock screen interface; or if the first application client is the display application client, displaying the multimedia information on display area in a current scene interface except the pop-up window; or if the first application client is the battery charging application client, displaying the multimedia information in a battery charging interface. In the present disclosure, different manners for displaying the multimedia information by different application clients are provided, therefore it can expand the manners to display the multimedia information, thus improving flexibility.

It is to be understood that both the forgoing general description and the following detailed description are exemplary only, and are not restrictive of the present disclosure.

### BRIEF DESCRIPTION OF THE DRAWINGS

The accompanying drawings are incorporated into the specification and form a part of the specification. The accompanying drawings illustrate embodiments conforming to the present disclosure and are to explain the principle of the disclosure along with the specification.
Fig. 1 is a flow diagram illustrating a method for displaying multimedia information according to an exemplary embodiment.
Fig. 2 is a flow diagram illustrating a method for displaying multimedia information according to an exemplary embodiment.
Fig. 3 is a flow diagram illustrating a method for displaying multimedia information according to an exemplary embodiment.
Fig. 4 is a flow diagram illustrating a method for displaying multimedia information according to an exemplary embodiment.
Fig. 5 is a flow diagram illustrating a method for displaying multimedia information according to an exemplary embodiment.
Fig. 6 is a schematic diagram of displaying multimedia information according to an exemplary embodiment.
Fig. 7 is a schematic diagram of displaying multimedia information according to an exemplary embodiment.
Fig. 8 is a schematic diagram of displaying multimedia information according to an exemplary embodiment.
Fig. 9A is a schematic diagram illustrating a structure of a network system according to an exemplary embodiment.
Fig. 9B is a schematic diagram illustrating an operation flow according to an exemplary embodiment.
Fig. 10 is a flow diagram illustrating a method for displaying multimedia information according to an exemplary embodiment.
Fig. 11 is a block diagram illustrating an apparatus for displaying multimedia information according to an exemplary embodiment.
Fig. 12 is a block diagram illustrating an apparatus for displaying multimedia information according to an exemplary embodiment.
Fig. 13 is a block diagram illustrating an apparatus for displaying multimedia information according to an exemplary embodiment.
Fig. 14 is a block diagram illustrating an apparatus for displaying multimedia information according to an exemplary embodiment.
Fig. 15 is a block diagram illustrating an apparatus for displaying multimedia information according to an exemplary embodiment.
Fig. 16 is a block diagram illustrating an apparatus for displaying multimedia information according to an exemplary embodiment.
Fig. 17 is a block diagram illustrating an apparatus for displaying multimedia information according to an exemplary embodiment.
Fig. 18 is a block diagram illustrating an apparatus for displaying multimedia information according to an exemplary embodiment.
Fig. 19 is a block diagram illustrating an apparatus for displaying multimedia information according to an exemplary embodiment.
Fig. 20 is a block diagram illustrating an apparatus for displaying multimedia information according to an exemplary embodiment.
Fig. 21 is a block diagram illustrating an apparatus for displaying multimedia information according to an exemplary embodiment.

### DETAILED DESCRIPTION

In order to make the solutions and advantages of the disclosure clear, further detail is provided in connection with the embodiments and accompanying drawings below. The exemplary embodiments and the corresponding description are to explain the present disclosure, but not to restrict the present disclosure.

A method and apparatus for displaying multimedia information are provided in the present disclosure, which may be described further in detail in connection with the accompanying drawings below.

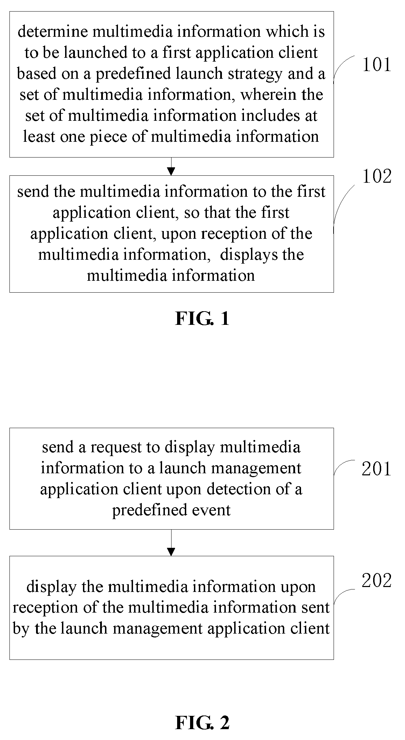

Fig. 1 is a flow diagram illustrating a method for displaying multimedia information according to an exemplary embodiment. As illustrated in Fig. 1, the method for displaying multimedia information is applied to a launch management application client launching multimedia information to other application clients than the launch management application client, wherein the method may include the following steps.

In step 101, multimedia information is determined which is to be launched in a first application client based on a predefined launch strategy and a set of multimedia information, wherein the set of multimedia information includes at least one piece of multimedia information.

In step 102, the multimedia information is sent to the first application client, so that the first application client, upon reception of the multimedia information, displays the multimedia information.

In related arts, the various application clients on a terminal are associated with different application servers, respectively. For each application client, the application server associated with the application client needs to set the launch strategy of the multimedia information based on which multimedia information is to be launched in the application client. The application client may consume network resources and power of the terminal when downloading the multimedia information from the application server. Each application client on the terminal may employ the same way to download the multimedia information. For any two different application clients on the terminal, even though they are to obtain the same multimedia information, they also need to download the multimedia information from different application servers, respectively, thus leading to repeat download of the same multimedia information and a waste in the network resources and power of the terminal.

In this embodiment, each installed application client is uniformly managed by the launch management application client running on the terminal. The launch management application client predefines the launch strategy and the set of multimedia information. During running process, the launch management application client monitors each other application client. Taking the first application client as an example, the launch management application client may determine the multimedia information which is to be launched in the first application client based on the launch strategy and the set of multimedia information. The multimedia information is sent to the first application client, so that the first application client, upon reception of the multimedia information, displays the multimedia information.

The terminal only needs to download one copy of the launch strategy and the set of multimedia information and it is not necessary for each application client to download the multimedia information from the application server individually, therefore, it avoids downloading the same multimedia information repeatedly, thus saving network resources and power of the terminal.

In the method provided in this embodiment, the launch management application client may manage each installed application client uniformly, and determine the multimedia information which is to be launched in the first application client based on the predefined launch strategy and the set of multimedia information, so that the first application client may display the multimedia information. It is not necessary for each application client to download the multimedia information from the application server individually, therefore, it is avoided to download the same multimedia information repeatedly, thus saving network resource and power of the terminal.

In an exemplary embodiment, before the determining multimedia information which is to be launched in a first application client based on a predefined launch strategy and a set of multimedia information, the method further includes: receiving a request to display multimedia information sent by the first application client which is currently running, wherein the request to display multimedia information is triggered by a predefined event occurred in the first application client.

In an exemplary embodiment, the method further includes: downloading the launch strategy and the set of multimedia information by invoking an interface with a server.

In an exemplary embodiment, the determining multimedia information which is to be launched in a first application client based on a predefined launch strategy and a set of multimedia information comprises: when the launch strategy includes a list of applications on which multimedia information should be launched, determining whether the list of applications includes the first application client; and when the list of applications includes the first application client, determining the multimedia information which is to be launched in the first application client based on the launch strategy and the set of multimedia information.

In an exemplary embodiment, the determining multimedia information which is to be launched in a first application client based on a predefined launch strategy and a set of multimedia information comprises: when the launch strategy includes a launch period of time for the first application client, obtaining a current system time indicated by a clock; determining whether the system time is in the launch period of time; and when the system time is in the launch period of time, determining the multimedia information which is to be launched in the first application client based on the launch strategy and the set of multimedia information.

In an exemplary embodiment, the determining multimedia information which is to be launched in a first application client based on a predefined launch strategy and a set of multimedia information comprises: when the launch strategy includes a first launch frequency, calculating a total launch frequency based on launch frequency of each application client on a terminal, wherein the first launch frequency indicates a launch frequency of the terminal; and when the total launch frequency is less than the first launch frequency, determining the multimedia information which is to be launched in the first application client based on the launch strategy and the set of multimedia information.

In an exemplary embodiment, the determining multimedia information which is to be launched in a first application client based on a predefined launch strategy and a set of multimedia information comprises: when the launch strategy includes specified multimedia information corresponding to the first application client, obtaining the specified multimedia information from the set of multimedia information.

In an exemplary embodiment, the determining multimedia information which is to be launched in a first application client based on a predefined launch strategy and a set of multimedia information comprises: when the launch strategy includes multiple pieces of specified multimedia information corresponding to the first application client and a second launch frequency of each piece of specified multimedia information, obtaining launch frequency for each piece of specified multimedia information corresponding to the first application client, wherein the second launch frequency indicates the launch frequency of the corresponding specified multimedia information; and when the launch frequency of the specified multimedia information is less than the corresponding second launch frequency, determining the specified multimedia information as the multimedia information which is to be launched in the first application client.

In an exemplary embodiment, the determining multimedia information which is to be launched in a first application client based on a predefined launch strategy and a set of multimedia information comprises: obtaining a current weight of each piece of multimedia information in the set of multimedia information, wherein the weight indicates a probability of a corresponding multimedia information being selected; and selecting the multimedia information which is to be launched in the first application client from the set of multimedia information in a descending order of the current weight of each piece of multimedia information.

The above technical solutions can be combined in any way to form an alternative embodiment of the present disclosure, which will not be described in detail.

Fig. 2 is a flow diagram illustrating a method for displaying multimedia information according to an exemplary embodiment. As illustrated in Fig. 2, the method for displaying multimedia information is applied to a first application client, wherein the method may include the following steps.

In step 201, a request to display multimedia information is sent to a launch management application client upon detection of a predefined event, wherein the first application client corresponds to at least one predefined event, and the launch management application client launches multimedia information to other application clients than the launch management application client.

In step 202, the multimedia information is displayed upon reception of the multimedia information sent by the launch management application client.

In this embodiment, the launch management application client may manage each installed application client uniformly, and determine the multimedia information which is to be launched in the first application client based on the predefined launch strategy and the set of multimedia information, so that the first application client may display the multimedia information. It is not necessary for each application client to download the multimedia information from the application server individually, it therefore avoids downloading the same multimedia information repeatedly, thus saving network resource and power of the terminal.

In an exemplary embodiment, the predefined event corresponding to a lock screen application client includes a lock screen event; the predefined event corresponding to a display application client includes a pop-up window event; and the predefined event corresponding to a battery charging application client includes a battery charging event under power-off state.

In an exemplary embodiment, displaying the multimedia information includes: if the first application client is the lock screen application client, displaying the multimedia information on a lock screen interface; or if the first application client is the display application client, displaying the multimedia information on display area in a current scene interface except the pop-up window; or if the first application client is the battery charging application client, displaying the multimedia information in a battery charging interface.

The above technical solutions can be combined in any way to form an alternative embodiment of the present disclosure, which will not be described in detail.

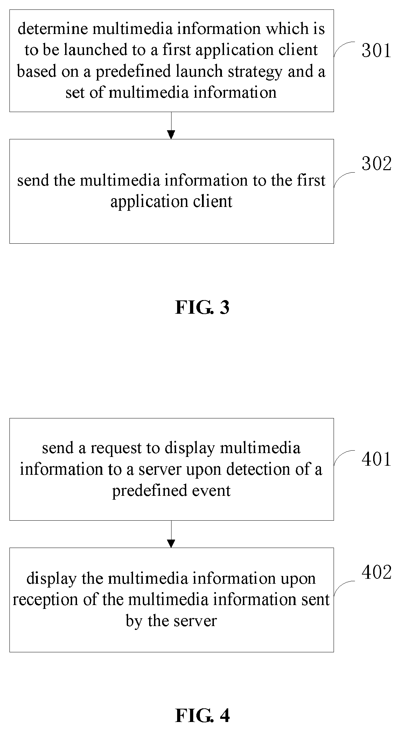

Fig. 3 is a flow diagram illustrating a method for displaying multimedia information according to an exemplary embodiment. As illustrated in Fig. 3, the method for displaying multimedia information is applied to a server launching multimedia information to an application client of a terminal, wherein the method may include the following steps.

In step 301, multimedia information is determined which is to be launched in a first application client based on a predefined launch strategy and a set of multimedia information, wherein the set of multimedia information includes at least one piece of multimedia information.

In step 302, the multimedia information is sent to the first application client, so that the first application client, upon reception of the multimedia information, displays the multimedia information.

In the method provided in this embodiment, the server may manage each application client installed on the terminal uniformly, and determine the multimedia information which is to be launched in the first application client based on the predefined launch strategy and the set of multimedia information, so that the first application client may display the multimedia information. It is not necessary for each application client to download the multimedia information from an application server individually, therefore it is avoided downloading the same multimedia information repeatedly, thus saving network resource and power of the terminal.

In an exemplary embodiment, before the determining multimedia information which is to be launched in a first application client based on a predefined launch strategy and a set of multimedia information, the method further includes: receiving a request to display multimedia information sent by the first application client which is currently running on the terminal, wherein the request to display multimedia information is triggered by a predefined event occurring in the first application client.

In an exemplary embodiment, the determining multimedia information which is to be launched in a first application client based on a predefined launch strategy and a set of multimedia information comprises: when the launch strategy includes a list of applications to which multimedia information should be launched, determining whether the list of applications includes the first application client; and when the list of applications includes the first application client, determining the multimedia information which is to be launched in the first application client based on the launch strategy and the set of multimedia information.

In an exemplary embodiment, the determining multimedia information which is to be launched in a first application client based on a predefined launch strategy and a set of multimedia information comprises: when the launch strategy includes a launch period of time for the first application client, obtaining a current system time indicated by a clock; determining whether the system time is in the launch period of time; and when the system time is in the launch period of time, determining the multimedia information which is to be launched in the first application client based on the launch strategy and the set of multimedia information.

In an exemplary embodiment, the determining multimedia information which is to be launched in a first application client based on a predefined launch strategy and a set of multimedia information comprises: when the launch strategy includes a first launch frequency, calculating a total launch frequency based on launch frequency of each application client on the terminal, wherein the first launch frequency indicates launch frequency of the terminal; and when the total launch frequency is less than the first launch frequency, determining the multimedia information which is to be launched in the first application client based on the launch strategy and the set of multimedia information.

In an exemplary embodiment, the determining multimedia information which is to be launched in a first application client based on a predefined launch strategy and a set of multimedia information comprises: when the launch strategy includes specified multimedia information corresponding to the first application client, obtaining the specified multimedia information from the set of multimedia information.

In an exemplary embodiment, the determining multimedia information which is to be launched in a first application client based on a predefined launch strategy and a set of multimedia information comprises: when the launch strategy includes multiple pieces of specified multimedia information corresponding to the first application client and a second launch frequency of each piece of specified multimedia information, obtaining launch frequency for each piece of specified multimedia information corresponding to the first application client, wherein the second launch frequency indicates the launch frequency of the corresponding specified multimedia information; and when the launch frequency of the specified multimedia information is less than the corresponding second launch frequency, determining the specified multimedia information as the multimedia information which is to be launched in the first application client.

In an exemplary embodiment, the determining multimedia information which is to be launched in a first application client based on a predefined launch strategy and a set of multimedia information comprises: obtaining a current weight of each piece of multimedia information in the set of multimedia information, wherein the weight indicates a probability of a corresponding multimedia information being selected; and selecting the multimedia information which is to be launched in the first application client from the set of multimedia information in a descending order of the current weight of each piece of multimedia information.

The above technical solutions can be combined in any way to form an alternative embodiment of the present disclosure, which will not be described in detail.

Fig. 4 is a flow diagram illustrating a method for displaying multimedia information according to an exemplary embodiment. As illustrated in Fig. 4, the method for displaying multimedia information is applied to a first application client, wherein the method may include the following steps.

In step 401, a request to display multimedia information is sent to a server upon detection of a predefined event, wherein the first application client corresponds to at least one predefined event, and the server launches multimedia information to an application client of a terminal.

In step 402, the multimedia information is displayed upon reception of the multimedia information sent by the server.

In this embodiment, the server may manage each installed application client uniformly, and determine the multimedia information which is to be launched in the first application client based on the predefined launch strategy and the set of multimedia information, so that the first application client may display the multimedia information. It is not necessary for each application client to downloading the multimedia information from the application server individually, therefore, it is avoided to download the same multimedia information repeatedly, thus saving network resource and power of the terminal.

In an exemplary embodiment, the predefined event corresponding to a lock screen application client includes a lock screen event; the predefined event corresponding to a display application client includes a pop-up window event; and the predefined event corresponding to a battery charging application client includes a battery charging event under power-off state.

In an exemplary embodiment, displaying the multimedia information includes: if the first application client is the lock screen application client, displaying the multimedia information on a lock screen interface; or if the first application client is the display application client, displaying the multimedia information on display area in a current scene interface except the pop-up window; or if the first application client is the battery charging application client, displaying the multimedia information in a battery charging interface.

The above technical solutions can be combined in any way to form an alternative embodiment of the present disclosure, which will not be described in detail.

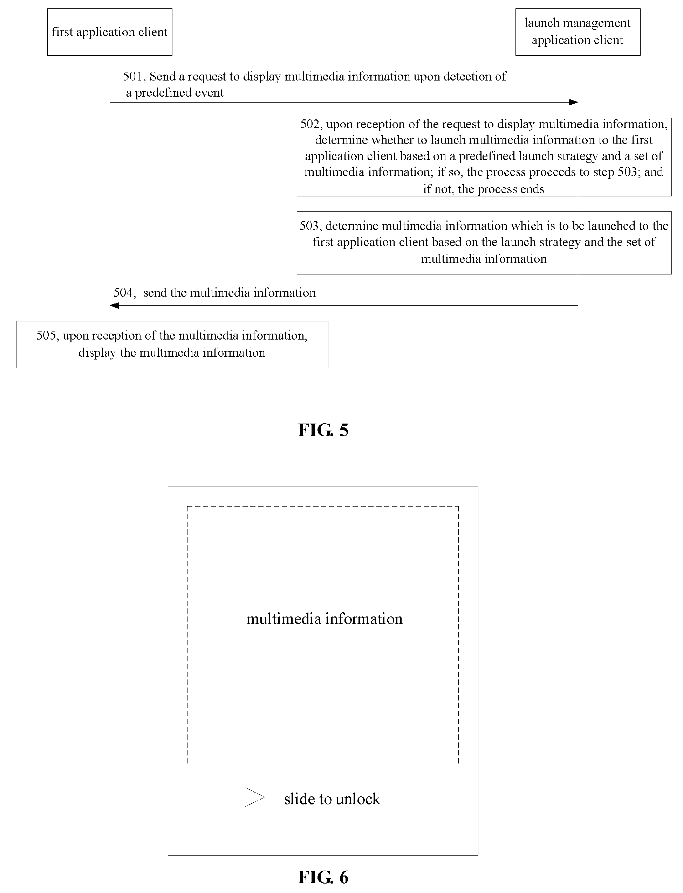

Fig. 5 is a flow diagram illustrating a method for displaying multimedia information according to an exemplary embodiment. As illustrated in Fig. 5, the interaction subjects are a launch management application client and a first application client of a terminal. The launch management application client launches multimedia information to the first application client. The method may include the following steps.

In step 501, the first application client may send a request to display multimedia information to the launch management application client upon detection of a predefined event.

In this embodiment, the terminal may be installed with the launch management application client, and may also be installed with at least one other application client. The other application client may include various kinds of application clients such as application software and application process in operation system, wherein the application software may include chatting application software, shopping application software and video playing application software, etc., and the application process may include the application process for managing battery charging event of the terminal and the application process for managing screen brightness of the terminal, etc.. The application client may be started up by the terminal automatically, or may be started up by a start-up operation triggered by a user, which is not limited to this embodiment.

In this embodiment, each application client corresponds to at least one predefined event. When the predefined event occurs, it is regarded that the current scene interface of the application client can display the multimedia information.

Taking the first application client as an example, when the first application client detects the predefined event, the current scene interface of the first application client may display the launched multimedia information. Then the first application client sends the request to display multimedia information to the launch management application client.

The predefined event corresponding to each application client may be determined based on the scene interface when the predefined event occurs, or may be determined by a developer of the application when developing the application. The predefined events corresponding to different application client may be the same, or may be different, which is not limited to this embodiment.

For example, the first application client may take the event that the corresponding scene interface includes blank display area as the predefined event. Once the predefined event occurs, the first application client may determine that the current scene interface includes blank display area which may display the multimedia information. Alternatively, the first application client may take the event that the corresponding scene interface includes redundant information display area as the predefined event. The redundant information display area refers to the area displaying redundant information which may be not related to the content of the current scene interface. Once the predefined event occurs, the first application client may determine that the current scene interface includes redundant information display area which may display the multimedia information instead of the currently displayed redundant information.

The predefined events may include at least one of lock screen event, pop-up window event and battery charging event under power-off state.

The application client corresponding to the lock screen event may be a lock screen application client for managing screen brightness of the terminal. The lock screen application client may detect whether the screen of the terminal is turned on or turned off. Upon detection of the screen of the terminal being turned off, the application client determines that the lock screen event occurs. When the lock screen event occurs, the display screen of the terminal may display the multimedia information.

The application client corresponding to the pop-up window event may include a display application client for managing the interface display of the terminal or a menu management application client for managing the menu, etc.. Upon detection of a pop-up window in the current scene interface, the display application client determines that the pop-up window event occurs. Upon detection of any menu being activated, the menu management application client determines that the pop-up window event occurs. When the pop-up window event occurs, the display area except the pop-up window in the current scene interface may display the multimedia information.

The application client corresponding to the battery charging event under power-off state may be a battery charging application client for managing the battery charging of the terminal. When charging the terminal, the battery charging application client may detect the battery charging event. When the battery charging application client determines that the terminal is under power-off state, the battery charging application client may determine that the battery charging event under power-off state occurs. When the battery charging event under power-off state occurs in the terminal, the display screen of the terminal may display the multimedia information.

It should be noted that the above three predefined events are only examples. In practice, other predefined events are possible, only if the current scene interface can display the multimedia information when the predefined events occur, which is not limited to this embodiment.

In step 502, upon reception of the request to display multimedia information sent by the first application client, the launch management application client may determine whether to launch multimedia information to the first application client based on a predefined launch strategy and a set of multimedia information. If so, the process proceeds to step 503; and if not, the process ends.

The launch strategy may manage the display of multimedia information, such as to manage the display time of multimedia information and to manage the application client for displaying multimedia information, etc., which is not limited to this embodiment. The set of multimedia information may include multiple pieces of multimedia information. In terms of format, each piece of multimedia information may include at least one of image information, video information, audio information and webpage link address, while in terms of content, the multimedia information may include various types of information such as make-ups, clothes and living goods, which is not limited to this embodiment.

The launch strategy and the set of multimedia information may be determined through negotiation between a server associated with the launch management application client and an advertiser producing the multimedia information. The server may update the launch strategy and the set of multimedia information. The launch management application client may download the launch strategy and the set of multimedia information from the server and save the launch strategy and the set of multimedia information.

For example, the launch management application client downloads the launch strategy and the set of multimedia information from the server by invoking an interface with the server. The launch management application client may invoke the interface with the server in real time or periodically to download the launch strategy and the set of multimedia information from the server. The period for download may be 10 hours and 24 hours, etc, which is not limited to this embodiment.

Alternatively, the launch management application client may download the updated launch strategy and set of multimedia information after the server has updated the launch strategy and the set of multimedia information. For example, the server may generate a new display data file and its version information which may include version name and generation time, etc. of the new display data file based on the updated launch strategy and set of multimedia information. The launch management application client may obtain the version information and determine whether the version information is the same as the version information of the display data file currently stored in the launch management application client. When the launch management application client determines that the version information is different from the version information currently stored, it means that the server has updated the display data file. The launch management application client may invoke the interface with the server to download the updated display data file and analyze the updated display data file to obtain the updated launch strategy and set of multimedia information.

In addition, the launch management application client may download the launch strategy and the set of multimedia information simultaneously, or may only download the launch strategy or the set of multimedia information. For example, the server may generate a launch strategy file based on the launch strategy and a display information file based on the set of multimedia information. When the server updates the launch strategy file, the launch management application client may download the updated launch strategy file from the server and analyze the updated launch strategy file to obtain the updated launch strategy. The launch management application client may manage the currently stored set of multimedia information based on the updated launch strategy. Alternatively, after the server has updated the display information file, the launch management application client may download the updated display information file from the server and analyze the updated display information file to obtain the updated set of multimedia information. The launch management application client may manage the updated set of multimedia information based on the currently stored launch strategy.

In this embodiment, upon reception of the request to display multimedia information sent by the first application client, the launch management application client may determine whether to launch multimedia information to the first application client based on the currently stored launch strategy and set of multimedia information.

For example, the step 502 may include at least one of the following steps (1)-(3).
(1) When the launch strategy includes a list of applications to which multimedia information should be launched, it is determined whether the list of applications includes the first application client. If so, the process proceeds to step 503; and if not, the process ends.
   The launch strategy may include the list of applications to which to launch multimedia information. The list of applications may include a plurality of application clients allowing displaying multimedia information. The launch management application client may determine whether the list of applications includes the first application client. When the list of applications includes the first application client, it means when the predefined event occurs, the first application client allows displaying multimedia information, and then the launch management application client performs step 503. When the list of applications does not include the first application client, it means when the predefined event occurs, the first application client does not allow displaying multimedia information, and then the launch management application client no longer launches multimedia information to the first application client.
(2) When the launch strategy includes a launch period of time for the first application client, a current system time indicated by a clock is obtained and it is determined whether the system time is in the launch period of time. If so, the process proceeds to step 503; and if not, the process ends.
   The launch strategy may also include the launch period of time for each application client which specifies the period of time allowing displaying multimedia information when the corresponding predefined event occurs. The launch periods of time for different application clients may be the same, or may be different, which is not limited to this embodiment.
   The launch management application client may obtain the launch period of time for the first application client and the current system time indicated by the clock to determine whether the system time is in the launch period of time for the first application client. When the system time is in the launch period of time, it means when the predefined event occurs at the current time, the first application client allows displaying multimedia information, and then the launch management application client performs step 503. When the system time is not in the launch period of time, it means when the predefined event occurs at the current time, the first application client does not allow displaying multimedia information, and then the launch management application client no longer launches multimedia information to the first application client.
(3) When the launch strategy includes a first launch frequency, a total launch frequency is calculated based on launch frequency of each application client on the terminal, and it is determined whether the total launch frequency is less than the first launch frequency. If so, the process proceeds to step 503; and if not, the process ends.

In practice, the launch management application client may launch multimedia information to different application clients when different predefined events occur. If the launch frequency of the terminal is too high, it is prone to disgust a user and reduce the user's experience. For this, the launch strategy may include a first launch frequency which restricts the frequency at which to launch the multimedia information to the terminal and indicate the maximum launch frequency of the terminal.

During launching the multimedia information to the application client, the launch management application client may generate a launch record which may include the multimedia information launched by the launch management application client. When determining whether to launch multimedia information to the first application client, the launch management application client may calculate the total launch frequency based on launch frequency of each application client on the terminal, and determine whether the total launch frequency is less than the first launch frequency. When the total launch frequency is less than the first launch frequency, it means that the total launch frequency of the terminal does not exceed the specified maximum launch frequency and it can also launch multimedia information to the application client of the terminal. Then the process proceeds to step 503. When the total launch frequency is not less than the first launch frequency, it means that the frequency at which multimedia information is launching on the terminal is too high to launch more multimedia information to the application client of the terminal.

The total launch frequency of the terminal may be represented with the number of display times within a predefined duration. The predefined duration may be determined based on the launch strategy, such as a day and a week, etc., which is not limited to this embodiment. For example, assuming the predefined duration is a day, when the terminal has displayed advertisements 3 times that day, the display frequency of the terminal is 3 per day.

It should be noted that the three manners in the above steps (1)-(3) are only examples. As long as the first application client satisfies any one of the above manners, it can be determined to launch multimedia information to the first application client. In practice, the launch management application client may combine any two or three of the three manners in any form to determine whether to launch multimedia information to the first application client.

Taking a connection of the steps (1) and (2) as an example, when the launch strategy includes a list of applications to which multimedia information should be launched, the launch management application client may determine whether the list of applications includes the first application client. If the list of applications includes the first application client, a launch period of time for the first application client and a current system time indicated by a clock may be obtained to determine whether the system time is in the launch period of time. If the system time is in the launch period of time, it is determined to launch multimedia information to the first application client, and then the process proceeds to the step 503. If the list of applications does not include the first application client or the system time is not in the launch period of time for the first application client, the launch management application client no longer launches multimedia information to the first application client.

In addition, the launch management application client may employ other ways to determine whether to launch multimedia information to the first application client, which is not limited to this embodiment.

In step 503, the launch management application client may determine multimedia information which is to be launched in the first application client based on the launch strategy and the set of multimedia information.

After determining to launch multimedia information to the first application client, the launch management application client may select the multimedia information which is to be launched in the first application client from the set of multimedia information.

For example, the launch management application client may determine a current weight of each piece of multimedia information in the set of multimedia information, and select the multimedia information which is to be launched in the first application client from the set of multimedia information in a descending order of the current weight of each piece of multimedia information. When selecting the multimedia information, the launch management application client may select one piece of multimedia information from the set of multimedia information in a descending order of the current weight of each piece of multimedia information, i.e., the multimedia information with the maximum weight. The launch management application client may also select a predefined number of pieces of multimedia information from the set of multimedia information, i.e., a predefined number of pieces of multimedia information with the maximum weights. The predefined number may be determined based on the launch strategy. The predefined numbers associated with different predefined events may be the same or may be different, which is not limited to this embodiment.

The weight may represent the probability of a corresponding multimedia information being selected. The value of the weight of each piece of multimedia information may be in a predefined range, such as (0, 1) or (0, 10) and the like. The sum of the weights of the multiple pieces of multimedia information may be 1 or another value, which is not limited to this embodiment. The weight of each piece of multimedia information may be determined by the launch management application client based on the launch strategy, or may be updated during operation.

For example, when the launch management application client has launched a piece of multimedia information to the first application client, the weight of the multimedia information may be reduced, so that when the predefined event occurs in the first application client, the launch management application client may launch another piece of multimedia information with higher weight instead of the multimedia information with the reduced weight to the first application client. By reducing the weight of the multimedia information which has been launched and increasing the weight of the multimedia information which has not yet been launched, the various multimedia information can be launched evenly, thus avoiding launching too much for a piece of multimedia information while too little for another piece of multimedia information.

In addition, when the launch strategy includes specified multimedia information corresponding to the first application client, the launch management application client may obtain the specified multimedia information corresponding to the first application client from the set of multimedia information and determine the specified multimedia information as the multimedia information which is to be launched in the first application client.

When the launch strategy includes multiple pieces of specified multimedia information corresponding to the first application client and a second launch frequency of each piece of specified multimedia information, the launch management application client may obtain launch frequency for each piece of specified multimedia information corresponding to the first application client. When the launch frequency of the specified multimedia information is less than the corresponding second launch frequency, the launch management application client may determine the specified multimedia information as the multimedia information which is to be launched in the first application client. Here, the second launch frequency indicates the maximum launch frequency of the corresponding specified multimedia information which restricts the launch frequency of the corresponding specified multimedia information.

The launch management application client may obtain the launch frequency of the specified multimedia information based on the pre-generated launch record. When the launch frequency is not less than the second launch frequency of the specified multimedia information, it means that the frequency at which to launch the specified multimedia information is too high and the specified multimedia information cannot be launched in the first application client any longer. When the launch frequency is less than the second launch frequency of the specified multimedia information, it means that the frequency at which to launch the specified multimedia information does not exceed the specified maximum launch frequency and the specified multimedia information can be launched in the first application client.

In step 504, the launch management application client may send the multimedia information to the first application client.

After determining the multimedia information which is to be launched in the first application client, the launch management application client may send the multimedia information to the first application client. The launch management application client may package the multimedia information, a button corresponding to the multimedia information and the launch strategy of the multimedia information into a View packet, and invoke an interface with the first application client to send the packet to the first application client. The packet may include all information necessary for displaying the multimedia information, such as a background image, a button and other additional information. After obtaining the packet, the first application client may invoke a standard additive interface AddView to add the packet to a display system of the first application client in which the multimedia information can be displayed. The various application clients may integrate the multimedia information conveniently through the standard AddView interface, thus reducing the integration difficulty.

The multimedia information may be various formats of information such as image information, video information and audio information. The first application client may determine the format of the multimedia information and submit the multimedia information to a processing module corresponding to the format to display the multimedia information by the processing module.

For example, if the multimedia information is the image information, the first application client may submit the image information to a display module to display the image information by the display module. If the multimedia information is the video information, the first application client may submit the video information to a video playing module to display the video information by the video playing module.

In step 505, upon reception of the multimedia information, the first application client may display the multimedia information.

Upon reception of the multimedia information, the first application client may display the multimedia information in current scene interface. For example, when the multimedia information includes the image information, the first application client may display the image information in the scene interface. When the multimedia information is the video information, the first application client may play the video information in the scene interface.

Upon reception of one piece of the multimedia information launched, the first application client may display the multimedia information in the scene interface. Upon reception of multiple pieces of the multimedia information launched, the first application client may display the multiple pieces of the multimedia information in the scene interface one by one or simultaneously, or the first application client may divide the multiple pieces of the multimedia information into two groups each including multiple pieces of the multimedia information. In the scene interface, one group of the multimedia information may be displayed firstly and then it is switched to display the other group of the multimedia information. The display manner for the multiple pieces of the multimedia information may be determined based on the launch strategy, which is not limited to this embodiment.

The first application client may determine the display area for the multimedia information based on original information being displayed in the current scene interface and display the multimedia information in the determined display area. For example, the first application client may take a blank display area in the current scene interface except the display area for the original information as the display area for the multimedia information and display the multimedia information in the in the blank display area. Alternatively, the first application client may take the whole screen of the terminal as the display area for the multimedia information and display the multimedia information in the current scene interface with the original information displayed in the scene interface displaying on top of the multimedia information so that the multimedia information acts as a background of the original information, which is not limited to this embodiment.

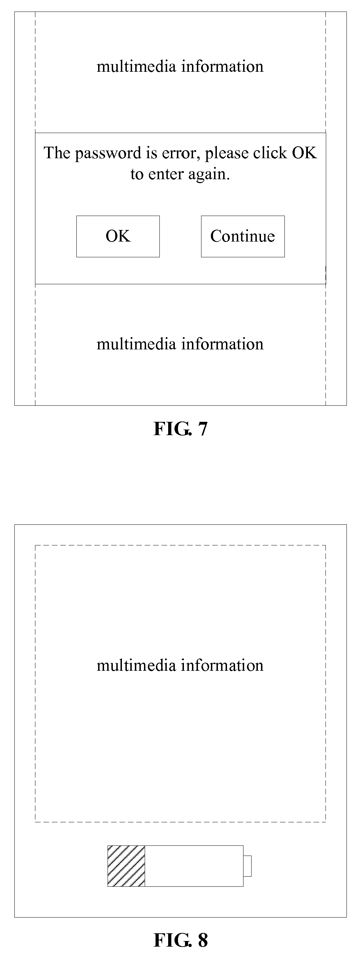

In addition, for different types of predefined events, the scene interfaces of the first application client are different, so that the display areas for the multimedia information are also different. Referring to Fig. 6, when the predefined event detected by the first application client is the lock screen event, a lock screen interface is displayed and the multimedia information is displayed in the lock screen interface. The display area for the multimedia information may be shown by dashed lines in Fig. 6. Alternatively, referring to Fig. 7, when the predefined event detected by the first application client is the pop-up window event, the display area in which the window is located is determined and the multimedia information is displayed in the display area except the window in the current scene interface. The display area for the multimedia information may be shown by dashed lines in Fig. 7. Alternatively, referring to Fig. 8, when the predefined event detected by the first application client is the battery charging event under power-off state, the first application client displays a battery charging interface in which to display the multimedia information. The display area for the multimedia information may be shown by dashed lines in Fig. 8.

The first application client displays the multimedia information in the current scene interface. When the predefined event ends, the first application client may stop displaying the multimedia information.

Taking the above three predefined events as an example, when the lock screen event occurs in the lock screen application client, the multimedia information is displayed on a lock screen interface. When the lock screen application client detects an operation of unlocking the screen, it is determined that an unlock screen event occurs. Then the lock screen application client may stop displaying the multimedia information, and display the interface being displayed when locking the screen instead.

When the pop-up window event occurs in the display application client, the multimedia information is displayed in the display area except the window in the current scene interface. Upon detection of an event of canceling displaying the window, the display application client may stop displaying the multimedia information and display the interface being displayed before the window popped up instead.

When the battery charging event under power-off state occurs in the battery charging application client, the multimedia information is displayed in the current scene interface. Upon detection of the terminal being turned on, the battery charging application client may stop displaying the multimedia information and display a main interface of the terminal. Alternatively, when the terminal stops being charged, the battery charging application client may stop displaying the multimedia information and turn off the screen of the terminal, thus displaying nothing on the screen.

When the first application client is displaying the multimedia information, the user may trigger an operation of viewing the multimedia information. The operation of viewing may be the operation of clicking the multimedia information or other operations, which is not limited to this embodiment. Upon detection of the operation of viewing the multimedia information, the first application client may display a detail page of the multimedia information. When the detail page is closed, the first application client may return to the current scene interface and continue to display the multimedia information.

The detail page may include detailed information about the multimedia information, such as brand, price, manufacturer and the like of the produce indicated by the multimedia information, which is not limited to this embodiment. The detail page may be pre-downloaded from an associated server by the launch management application client, or may be downloaded from a server corresponding to the multimedia information by the first application client. For example, if the multimedia information is a webpage link address, the first application client may send an access request to a server corresponding to the webpage link address and receive a webpage returned from the server which is the detail page of the multimedia information.

When the first application client is displaying the multimedia information, the user may trigger an operation of sharing the multimedia information. For example, the interface may include an option of sharing, and the operation of sharing may be the operation of clicking the option of sharing. Upon detection of the operation of sharing the multimedia information, the first application client may send a request for sharing the multimedia information to a server. After receiving the request for sharing, the server may issue a message of sharing the multimedia information, so that a friend of the user of the first application client may view the message to know that the first application client has shared the multimedia information. In addition, after sending the request for sharing to the server, the first application client may return to the current scene interface and continue to display the multimedia information.

In addition, after the first application client completes displaying the multimedia information, the launch management application client may update the launch record by adding the multimedia information to the launch record. The launch management application client may also add to the launch record the time when the first application client displayed the multimedia information, the operation triggered by the user to the multimedia information and the like, which is not limited to this embodiment. Then the launch management application client may send the launch record to the server. The launch record is stored by the server.

After the launch management application client downloads the launch strategy and the set of multimedia information, the multimedia information may be displayed and the launch record may be generated in case of disconnecting with the server. The above process may be performed under an offline state without connecting with the network. When recovering the network connection with the server, the launch management application client may send the launch record to the server.

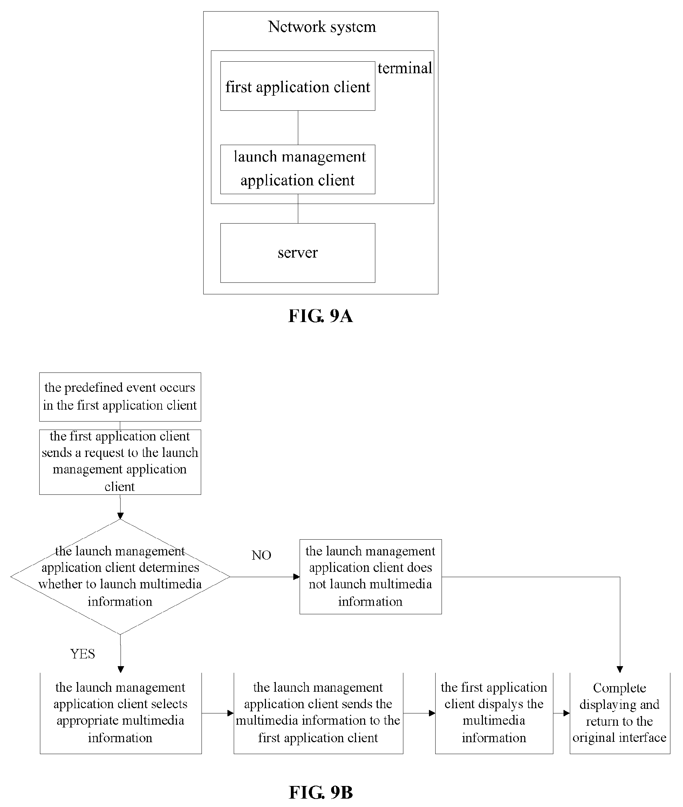

Fig. 9A is a structure diagram of a network system provided by an embodiment. Referring to Fig. 9A, the network system may include a terminal and a server serving for the terminal. The terminal and the server are connected with a network connection. The server may set a launch strategy and obtain a set of multimedia information. The terminal may run a launch management application client which may download the launch strategy and the set of multimedia information from the server by invoking an interface with the server. When a predefined event occurs in a first application client, the launch management application client may launch multimedia information to the first application client based on the launch strategy and the set of multimedia information. The multimedia information may be displayed by the first application client. The operation flow of the launch management application client may be shown in Fig. 9B.

In the method provided in this embodiment, the launch management application client may manage each installed application client uniformly, and determine the multimedia information which is to be launched in the first application client based on the predefined launch strategy and the set of multimedia information, so that the first application client may display the multimedia information. It is not necessary for each application client to download the multimedia information from an application server individually, therefore it is avoided downloading the same multimedia information repeatedly, thus saving network resource and power of the terminal. By launching the multimedia information to the first application client when the predefined event occurs in the first application client rather than launching the multimedia information only when the application client is started up, it can expand the manners to launch the multimedia information, thus improving flexibility.

In related arts, multiple application servers are configured with the launch strategy individually, and each application client downloads advertisement resource from corresponding application server individually. In practice, an application producer needs to negotiate with an advertiser based on its own requirements and the advertiser may determine whether to launch an opening advertisement based on information such as the number of users of the application client. It is once determined to launch the opening advertisement to the application client, the application server needs to integrate packets of the opening advertisement provided by the advertiser and set many launch strategies to manage the launched opening advertisement. The application client on the terminal needs to invoke the corresponding interface to obtain the opening advertisement, so that the opening advertisement can be displayed. It is cumbersome to configure the application server. The application client needs to obtain the latest resource from the application server regularly, which consumes a large amount of network resource and power of the terminal. Some application clients with fewer users even cannot find the appropriate advertiser to launch the opening advertisement to them. Each application client on the terminal operates individually, thus cannot be managed uniformly.

However, the network system of this embodiment may only include the terminal and one server. The terminal may run the launch management application client which only needs to download one copy of the launch strategy and the advertisement resource from the server to launch the advertisement to different application clients, thus achieving the uniform management for multiple application clients. The launch management application client may also update the launch strategy and the advertisement resource by obtaining version information from the server regularly. It is not necessary for each application client to download the advertisement resource from the application server individually, therefore it is avoided downloading the same advertisement resource repeatedly, thus saving the network resource and the power of the terminal. The launch management application client may also provide the corresponding launch strategy, such as time period control strategy, frequency control strategy and so on, and may be responsible for the overall user experience of the terminal. The server associated with the launch management application client only needs to be configured with one copy of the launch strategy and the advertisement resource, while the application server is not necessary to be configured with the launch strategy and the advertisement resource, thus simplifying the operation of the application server.

A system-level advertisement display platform is provided on the terminal in the present disclosure. The producer of the terminal may negotiate with the advertiser to display an appropriate advertisement automatically when the predefined event occurs. No matter the number of users of the application client is large or small, as long as the advertiser has negotiated with the producer of the terminal successfully, it can be achieved the launch of the advertisement, thus achieving the same effect as the related arts as well as receiving a reward from the producer of the terminal, without any configuration to the application server, without any launch strategy or interface invocation, and without obtaining any advertisement resource from the application server regularly. The terminal may display the multimedia information in any blank area in current scene interface rather than only displaying the multimedia information in a start-up interface of the application client, thus expanding the manners of displaying.

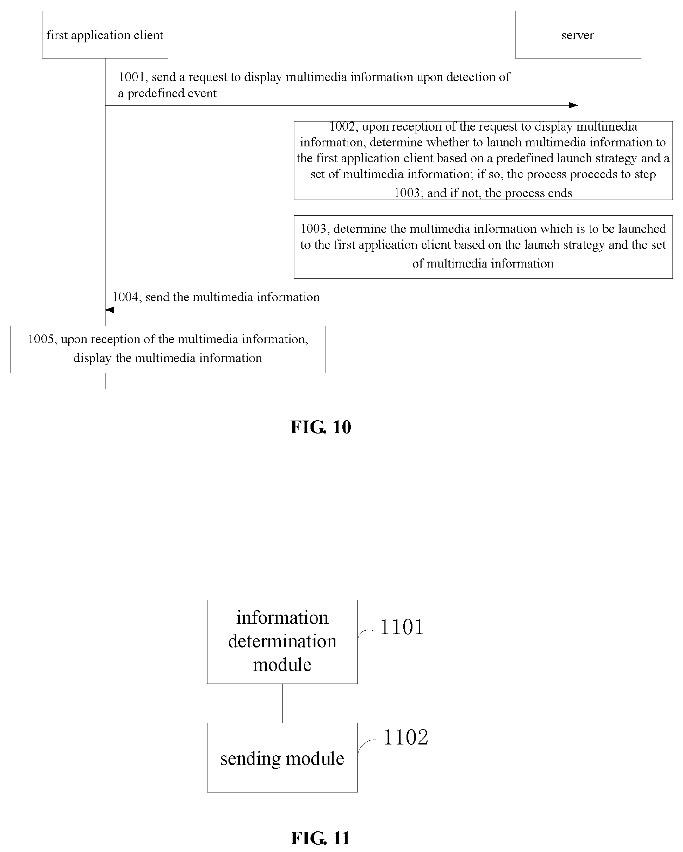

Fig. 10 is a flow diagram illustrating a method for displaying multimedia information according to an exemplary embodiment. As illustrated in Fig. 10, the interaction subjects are a first application client and a server. The method may include the following steps.

In step 1001, the first application client may send a request to display multimedia information to the server upon detection of a predefined event.

The server is associated with various application clients installed on a terminal to launch the multimedia information to the various application clients installed on the terminal.

In step 1002, upon reception of the request to display multimedia information sent by the first application client, the server may determine whether to launch multimedia information to the first application client based on a predefined launch strategy and a set of multimedia information. If so, the process proceeds to step 1003; and if not, the process ends.

In step 1003, the server may determine multimedia information which is to be launched in the first application client based on the launch strategy and the set of multimedia information.

In step 1004, the server may send the multimedia information to the first application client.

In step 1005, upon reception of the multimedia information, the first application client may display the multimedia information.

The steps 1001-1005 are similar with the steps 501-505 and will not be described in detail.

In the method provided in this embodiment, the server may manage each application client installed on the terminal uniformly, and determine the multimedia information which is to be launched in the first application client based on the predefined launch strategy and the set of multimedia information, so that the first application client may display the multimedia information. It is not necessary for each application client to download the multimedia information from an application server individually, therefore it is avoided downloading the same multimedia information repeatedly, thus saving network resource and power of the terminal.

Fig. 11 is a block diagram illustrating an apparatus for displaying multimedia information according to an exemplary embodiment. As illustrated in Fig. 11, the apparatus is applied to a launch management application client launching multimedia information to other application clients than the launch management application client. The apparatus may include an information determination module 1101 and a sending module 1102.

The information determination module 1101 is configured to determine multimedia information which is to be launched in a first application client based on a predefined launch strategy and a set of multimedia information, wherein the set of multimedia information includes at least one piece of multimedia information.

The sending module 1102 is configured to send the multimedia information to the first application client, so that the first application client displays, upon reception of the multimedia information, the multimedia information.

In the apparatus provided in this embodiment, the launch management application client may manage each installed application client uniformly, and determine the multimedia information which is to be launched in the first application client based on the predefined launch strategy and the set of multimedia information, so that the first application client may display the multimedia information. It is not necessary for each application client to download the multimedia information from an application server individually, therefore it is avoided downloading the same multimedia information repeatedly, thus saving network resource and power of a terminal.

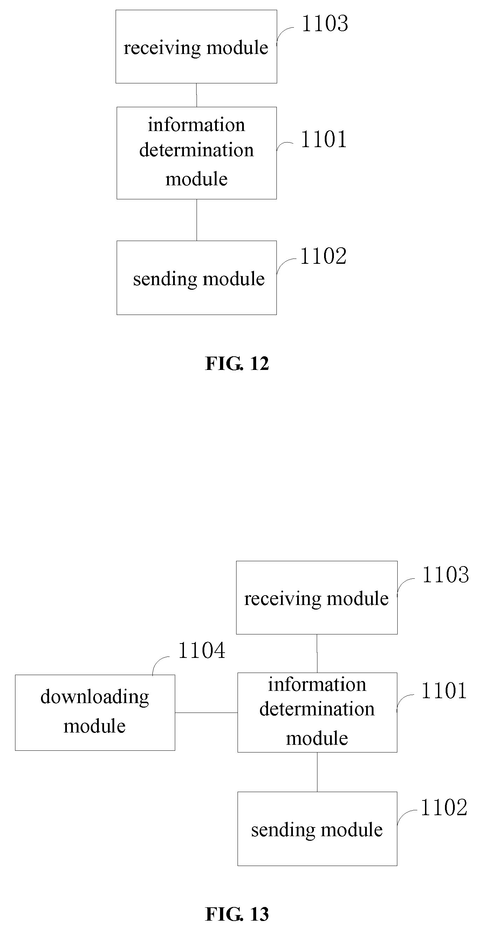

Referring to Fig. 12, in an exemplary embodiment, the apparatus further includes: a receiving module 1103 configured to receive a request to display multimedia information sent by the first application client which is currently running, wherein the request to display multimedia information is triggered by a predefined event occurred in the first application client.

Referring to Fig. 13, in an exemplary embodiment, the apparatus further includes: a downloading module 1104 configured to download the launch strategy and the set of multimedia information by invoking an interface with a server.

In an exemplary embodiment, the information determination module 1101 is further configured to: when the launch strategy includes a list of applications to which multimedia information should be launched, determine whether the list of applications includes the first application client; and when the list of applications includes the first application client, determine the multimedia information which is to be launched in the first application client based on the launch strategy and the set of multimedia information.

In an exemplary embodiment, the information determination module 1101 is further configured to: when the launch strategy includes a launch period of time for the first application client, obtain a current system time indicated by a clock; determine whether the system time is in the launch period of time; and when the system time is in the launch period of time, determine the multimedia information which is to be launched in the first application client based on the launch strategy and the set of multimedia information.

In an exemplary embodiment, the information determination module 1101 is further configured to: when the launch strategy includes a first launch frequency, calculate a total launch frequency based on launch frequency of each application client on a terminal, wherein the first launch frequency indicates launch frequency of the terminal; and when the total launch frequency is less than the first launch frequency, determine the multimedia information which is to be launched in the first application client based on the launch strategy and the set of multimedia information.

In an exemplary embodiment, the information determination module 1101 is further configured to: when the launch strategy includes specified multimedia information corresponding to the first application client, obtain the specified multimedia information corresponding to the first application client from the set of multimedia information.

In an exemplary embodiment, the information determination module 1101 is further configured to: when the launch strategy includes multiple pieces of specified multimedia information corresponding to the first application client and a second launch frequency of each piece of specified multimedia information, obtain launch frequency for each piece of specified multimedia information corresponding to the first application client, wherein the second launch frequency indicates the launch frequency of the corresponding specified multimedia information; and when the launch frequency of the specified multimedia information is less than the corresponding second launch frequency, determine the specified multimedia information as the multimedia information which is to be launched in the first application client.

In an exemplary embodiment, the information determination module 1101 is further configured to: obtain a current weight of each piece of multimedia information in the set of multimedia information, wherein the weight indicates a probability of a corresponding multimedia information being selected; and select the multimedia information which is to be launched in the first application client from the set of multimedia information in a descending order of the current weight of each piece of multimedia information.

All the above alternative technical solutions may form an alternative embodiment of the present disclosure in any connection, which will not be described here.

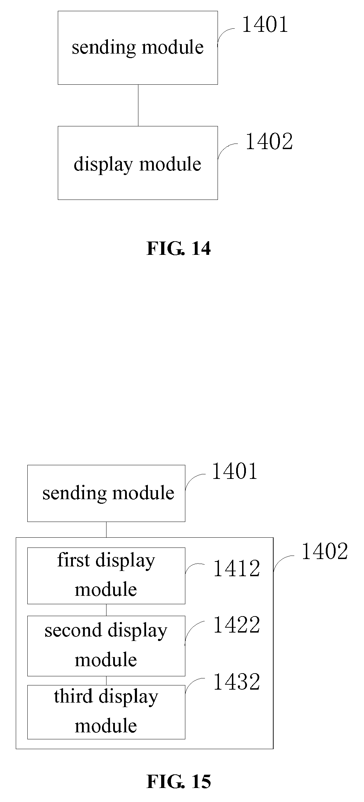

Fig. 14 is a block diagram illustrating an apparatus for displaying multimedia information according to an exemplary embodiment. As illustrated in Fig. 14, the apparatus is applied to a first application client. The apparatus may include a sending module 1401 and a display module 1402.

The sending module 1401 is configured to send a request to display multimedia information to a launch management application client upon detection of a predefined event, wherein the first application client corresponds to at least one predefined event, and the launch management application client launches multimedia information to other application clients than the launch management application client.

The display module 1402 is configured to display the multimedia information upon reception of the multimedia information sent by the launch management application client.

In the apparatus provided in this embodiment, the launch management application client may manage each installed application client uniformly, and determine the multimedia information which is to be launched in the first application client based on the predefined launch strategy and the set of multimedia information, so that the first application client may display the multimedia information. It is not necessary for each application client to download the multimedia information from an application server individually, therefore it is avoided downloading the same multimedia information repeatedly, thus saving network resource and power of a terminal.

In an exemplary embodiment, the predefined event corresponding to a lock screen application client includes a lock screen event; the predefined event corresponding to a display application client includes a pop-up window event; and the predefined event corresponding to a battery charging application client includes a battery charging event under power-off state.

Referring to Fig. 15, in an exemplary embodiment, the display module 1402 includes: a first display module 1412 configured to display the multimedia information on a lock screen interface if the first application client is the lock screen application client; or a second display module 1422 configured to display the multimedia information on display area in a current scene interface except the pop-up window if the first application client is the display application client; or a third display module 1432 configured to display the multimedia information in a battery charging interface if the first application client is the battery charging application client.

All the above alternative technical solutions may form an alternative embodiment of the present disclosure in any connection, which will not be described here.

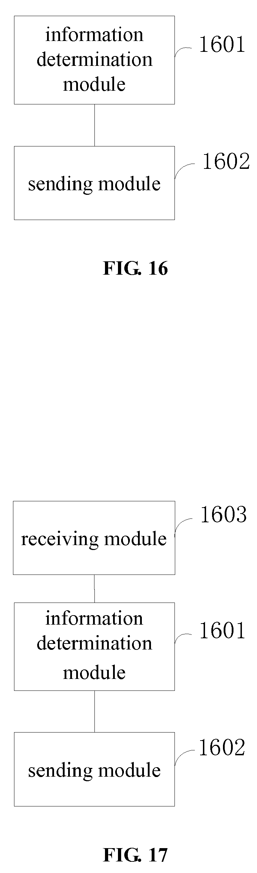

Fig. 16 is a block diagram illustrating an apparatus for displaying multimedia information according to an exemplary embodiment. As illustrated in Fig. 16, the apparatus is applied to a server launching the multimedia information to an application client of a terminal. The apparatus may include an information determination module 1601 and a sending module 1602.

The information determination module 1601 is configured to determine multimedia information which is to be launched in a first application client based on a predefined launch strategy and a set of multimedia information, wherein the set of multimedia information includes at least one piece of multimedia information.

The sending module 1602 is configured to send the multimedia information to the first application client, so that the first application client, upon reception of the multimedia information, displays the multimedia information.

In the apparatus provided in this embodiment, the server may manage each application client installed on the terminal uniformly, and determine the multimedia information which is to be launched in the first application client based on the predefined launch strategy and the set of multimedia information, so that the first application client may display the multimedia information. It is not necessary for each application client to download the multimedia information from an application server individually, therefore it is avoided downloading the same multimedia information repeatedly, thus saving network resource and power of the terminal.

Referring to Fig. 17, in an exemplary embodiment, the apparatus may further include: a receiving module 1603 configured to receive a request to display multimedia information sent by the first application client which is currently running on the terminal, wherein the request to display multimedia information is triggered by a predefined event occurred in the first application client.

In an exemplary embodiment, the information determination module 1601 is further configured to: when the launch strategy includes a list of applications to which multimedia information should be launched, determine whether the list of applications includes the first application client; and when the list of applications includes the first application client, determine the multimedia information which is to be launched in the first application client based on the launch strategy and the set of multimedia information.

In an exemplary embodiment, the information determination module 1601 is further configured to: when the launch strategy includes a launch period of time for the first application client, obtain a current system time indicated by a clock; determine whether the system time is in the launch period of time; and when the system time is in the launch period of time, determine the multimedia information which is to be launched in the first application client based on the launch strategy and the set of multimedia information.

In an exemplary embodiment, the information determination module 1601 is further configured to: when the launch strategy includes a first launch frequency, calculate a total launch frequency based on launch frequency of each application client on the terminal, wherein the first launch frequency indicates launch frequency of the terminal; and when the total launch frequency is less than the first launch frequency, determine the multimedia information which is to be launched in the first application client based on the launch strategy and the set of multimedia information.

In an exemplary embodiment, the information determination module 1601 is further configured to: when the launch strategy includes specified multimedia information corresponding to the first application client, obtain the specified multimedia information corresponding to the first application client from the set of multimedia information.

In an exemplary embodiment, the information determination module 1601 is further configured to: when the launch strategy includes multiple pieces of specified multimedia information corresponding to the first application client and a second launch frequency of each piece of specified multimedia information, obtain launch frequency for each piece of specified multimedia information corresponding to the first application client, wherein the second launch frequency indicates the launch frequency of the corresponding specified multimedia information; and when the launch frequency of the specified multimedia information is less than the corresponding second launch frequency, determine the specified multimedia information as the multimedia information which is to be launched in the first application client.

In an exemplary embodiment, the information determination module 1601 is further configured to: obtain a current weight of each piece of multimedia information in the set of multimedia information, wherein the weight indicates a probability of a corresponding multimedia information being selected; and select the multimedia information which is to be launched in the first application client from the set of multimedia information in a descending order of the current weight of each piece of multimedia information.

All the above alternative technical solutions may form an alternative embodiment of the present disclosure in any connection, which will not be described here.

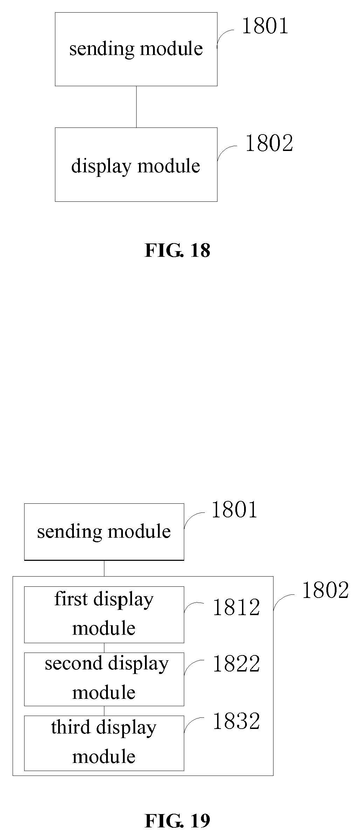

Fig. 18 is a block diagram illustrating an apparatus for displaying multimedia information according to an exemplary embodiment. As illustrated in Fig. 18, the apparatus is applied to a first application client. The apparatus may include a sending module 1801 and a display module 1802.

The sending module 1801 is configured to send a request to display multimedia information to a server upon detection of a predefined event, wherein the first application client corresponds to at least one predefined event, and the server launches multimedia information to an application client of a terminal.

The display module 1802 is configured to display the multimedia information upon reception of the multimedia information sent by the server.

In the apparatus provided in this embodiment, the server may manage each application client installed on the terminal uniformly, and determine the multimedia information which is to be launched in the first application client based on the predefined launch strategy and the set of multimedia information, so that the first application client may display the multimedia information. It is not necessary for each application client to download the multimedia information from an application server individually, therefore it is avoided downloading the same multimedia information repeatedly, thus saving network resource and power of the terminal.

In an exemplary embodiment, the predefined event corresponding to a lock screen application client includes a lock screen event; the predefined event corresponding to a display application client includes a pop-up window event; and the predefined event corresponding to a battery charging application client includes a battery charging event under power-off state.

Referring to Fig. 19, in an exemplary embodiment, the display module 1802 includes: a first display module 1812 configured to display the multimedia information on a lock screen interface if the first application client is the lock screen application client; or a second display module 1822 configured to display the multimedia information on display area in a current scene interface except the pop-up window if the first application client is the display application client; or a third display module 1832 configured to display the multimedia information in a battery charging interface if the first application client is the battery charging application client.

All the above alternative technical solutions may form an alternative embodiment of the present disclosure in any connection, which will not be described here.

With respect to the apparatus in the above described embodiments, the way in which each module operates has been described in detail in embodiments of the corresponding method and will not be described here.

It should be noted that when the apparatus for displaying multimedia information provided in the above described embodiments displays the multimedia information, the division of the above described modules is only an example. In practice, the above described functions may be distributed to different modules as required, that is to say, the terminal and the server may be divided into different modules, to achieve part or all of the above described functions. In addition, the method and the apparatus for displaying multimedia information provided in the embodiments belong to a same concept, the detailed implementation of which may be referred to the method embodiments and will not described here.

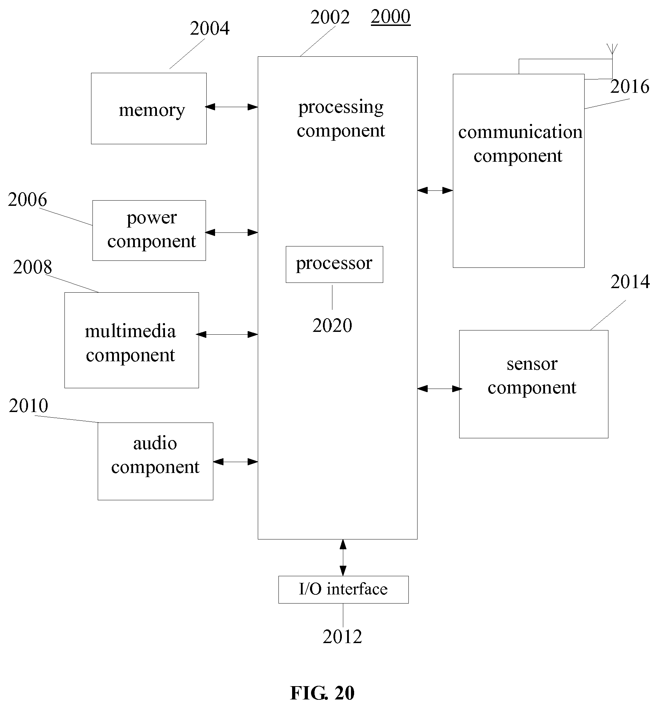

Fig. 20 is a block diagram of an apparatus 2000 for displaying multimedia information according to an exemplary embodiment. For example, the apparatus 2000 may be a mobile phone, a computer, a digital broadcast terminal, a messaging device, a gaming console, a tablet, a medical device, exercise equipment, a personal digital assistant and the like.

Referring to Fig. 20, the apparatus 2000 may include one or more of the following components: a processing component 2002, a memory 2004, a power component 2006, a multimedia component 2008, an audio component 2010, an input/output (I/O) interface 2012, a sensor component 2014, and a communication component 2016.

The processing component 2002 typically controls overall operations of the apparatus 2000, such as the operations associated with display, telephone calls, data communications, camera operations, and recording operations. The processing component 2002 may include one or more processors 2020 to execute instructions to perform all or part of the steps in the above described methods. Moreover, the processing component 2002 may include one or more modules which facilitate the interaction between the processing component 2002 and other components. For instance, the processing component 2002 may include a multimedia module to facilitate the interaction between the multimedia component 2008 and the processing component 2002.

The memory 2004 is configured to store various types of data to support the operation of the apparatus 2000. Examples of such data include instructions for any applications or methods operated on the apparatus 2000, contact data, phonebook data, messages, pictures, video, etc. The memory 2004 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 2006 provides power to various components of the apparatus 2000. The power component 2006 may include a power management system, one or more power sources, and any other components associated with the generation, management, and distribution of power for the apparatus 2000.

The multimedia component 2008 includes a screen providing an output interface between the apparatus 2000 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 2008 includes a front camera and/or a rear camera. The front camera and the rear camera may receive an external multimedia datum while the apparatus 2000 is in an operation mode, such as a photographing mode or a video mode. Each of the front camera and the rear camera may be a fixed optical lens system or have optical focusing and zooming capability.

The audio component 2010 is configured to output and/or input audio signals. For example, the audio component 2010 includes a microphone ("MIC") configured to receive an external audio signal when the apparatus 2000 is in an operation mode, such as a call mode, a recording mode, and a voice recognition mode. The received audio signal may be further stored in the memory 2004 or transmitted via the communication component 2016. In some embodiments, the audio component 2010 further includes a speaker to output audio signals.

The I/O interface 2012 provides an interface between the processing component 2002 and peripheral interface modules, the peripheral interface modules being, for example, a keyboard, a click wheel, buttons, and the like. The buttons may include, but are not limited to, a home button, a volume button, a starting button, and a locking button.

The sensor component 2014 includes one or more sensors to provide status assessments of various aspects of the apparatus 2000. For instance, the sensor component 2014 may detect an open/closed status of the apparatus 2000, relative positioning of components (e.g., the display and the keypad, of the apparatus 2000), a change in position of the apparatus 2000 or a component of the apparatus 2000, a presence or absence of user contact with the apparatus 2000, an orientation or an acceleration/deceleration of the apparatus 2000, and a change in temperature of the apparatus 2000. The sensor component 2014 may include a proximity sensor configured to detect the presence of a nearby object without any physical contact. The sensor component 2014 may also include a light sensor, such as a CMOS or CCD image sensor, for use in imaging applications. In some embodiments, the sensor component 2014 may also include an accelerometer sensor, a gyroscope sensor, a magnetic sensor, a pressure sensor, or a temperature sensor.

The communication component 2016 is configured to facilitate communication, wired or wirelessly, between the apparatus 2000 and other devices. The apparatus 2000 can access a wireless network based on a communication standard, such as WiFi, 2G, or 3G, or a combination thereof. In an exemplary embodiment, the communication component 2016 receives a broadcast signal or broadcast associated information from an external broadcast management system via a broadcast channel. In an exemplary embodiment, the communication component 2016 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the apparatus 2000 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 2004, executable by the processor 2020 in the apparatus 2000, for performing the above-described methods. For example, the non-transitory computer-readable storage medium may be a ROM, a RAM, a CD-ROM, a magnetic tape, a floppy disc, an optical data storage device, and the like.

A non-transitory computer readable storage medium having stored therein instructions that, when executed by a processor of a terminal, cause the terminal to perform a method for displaying multimedia information, including: determining multimedia information which is to be launched in a first application client based on a predefined launch strategy and a set of multimedia information, wherein the set of multimedia information includes at least one piece of multimedia information; and sending the multimedia information to the first application client, so that the first application client, upon reception of the multimedia information, displays the multimedia information.

In an exemplary embodiment, before the determining multimedia information which is to be launched in a first application client based on a predefined launch strategy and a set of multimedia information, the method further includes: receiving a request to display multimedia information sent by the first application client which is currently running, wherein the request to display multimedia information is triggered by a predefined event occurred in the first application client.

In an exemplary embodiment, the method further includes: downloading the launch strategy and the set of multimedia information by invoking an interface with a server.

In an exemplary embodiment, the determining multimedia information which is to be launched in a first application client based on a predefined launch strategy and a set of multimedia information comprises: when the launch strategy includes a list of applications to which multimedia information should be launched, determining whether the list of applications includes the first application client; and when the list of applications includes the first application client, determining the multimedia information which is to be launched in the first application client based on the launch strategy and the set of multimedia information.

In an exemplary embodiment, the determining multimedia information which is to be launched in a first application client based on a predefined launch strategy and a set of multimedia information comprises: when the launch strategy includes a launch period of time for the first application client, obtaining a current system time indicated by a clock; determining whether the system time is in the launch period of time; and when the system time is in the launch period of time, determining the multimedia information which is to be launched in the first application client based on the launch strategy and the set of multimedia information.

In an exemplary embodiment, the determining multimedia information which is to be launched in a first application client based on a predefined launch strategy and a set of multimedia information comprises: when the launch strategy includes a first launch frequency, calculating a total launch frequency based on launch frequency of each application client on a terminal, wherein the first launch frequency indicates launch frequency of the terminal; and when the total launch frequency is less than the first launch frequency, determining the multimedia information which is to be launched in the first application client based on the launch strategy and the set of multimedia information.

In an exemplary embodiment, the determining multimedia information which is to be launched in a first application client based on a predefined launch strategy and a set of multimedia information comprises: when the launch strategy includes specified multimedia information corresponding to the first application client, obtaining the specified multimedia information from the set of multimedia information.

In an exemplary embodiment, the determining multimedia information which is to be launched in a first application client based on a predefined launch strategy and a set of multimedia information comprises: when the launch strategy includes multiple pieces of specified multimedia information corresponding to the first application client and a second launch frequency of each piece of specified multimedia information, obtaining launch frequency for each piece of specified multimedia information corresponding to the first application client, wherein the second launch frequency indicates the launch frequency of the corresponding specified multimedia information; and when the launch frequency of the specified multimedia information is less than the corresponding second launch frequency, determining the specified multimedia information as the multimedia information which is to be launched in the first application client.

In an exemplary embodiment, the determining multimedia information which is to be launched in a first application client based on a predefined launch strategy and a set of multimedia information comprises: obtaining a current weight of each piece of multimedia information in the set of multimedia information, wherein the weight indicates a probability of a corresponding multimedia information being selected; and selecting the multimedia information which is to be launched in the first application client from the set of multimedia information in a descending order of the current weight of each piece of multimedia information.

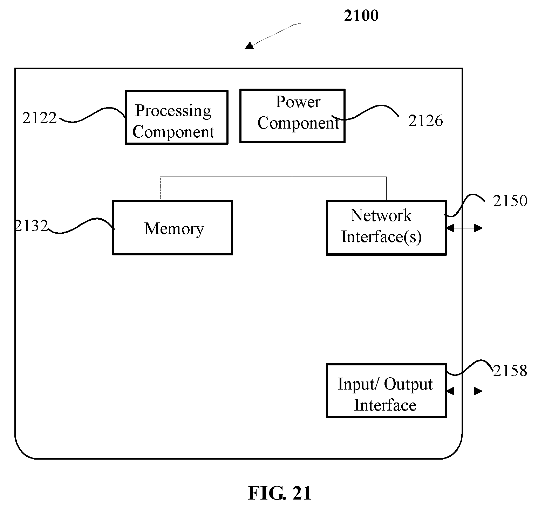

Fig. 21 is a block diagram of an apparatus 2100 for displaying multimedia information according to an exemplary embodiment. For example, the apparatus 2100 may be a server. Referring to Fig. 21, the apparatus 2100 may include a processing component 2122 (e.g. one or more processors), a memory 2132 storing instructions (e.g. application programs) executable by the processing component 2122. The application programs stored in the memory 2132 may include one or more modules. Each module may include a set of instructions. Further, the processing component 2122 may be configured to execute the sets of instructions and perform the method for displaying multimedia information described above.

The apparatus 2100 may also include a power supply 2126 configured to perform power management for the apparatus 2100, a wired or wireless network interfaces 2150 configured to connect the apparatus 2100 to the network, an input/output interfaces 2158. The apparatus 2100 may operate based on an operating system stored in the memory 2132, such as Windows Server^{™}, Mac OS X^{™}, Unix^{™}, Linux^{™}, FreeBSD^{™}, or the like.

Other embodiments of the invention will be apparent to those skilled in the art from consideration of the specification and practice of the disclosures herein. This application is intended to cover any variations, uses, or adaptations of the disclosure following the general principles thereof and including such departures from the present disclosure as come within known or customary practice in the art. It is intended that the specification and examples be considered as exemplary only, with a true scope of the invention being indicated by the following claims.

It will be appreciated that the inventive concept is not limited to the exact construction that has been described above and illustrated in the accompanying drawings, and that various modifications and changes can be made without departing from the scope thereof. It is intended that the scope of the invention only be limited by the appended claims.

## Claims

1. A method for displaying multimedia information in a launch management application client, the launch management application client launching multimedia information to other application clients than the launch management application client, the method comprising:
determining (101) multimedia information which is to be launched in a first application client based on a predefined launch strategy and a set of multimedia information, wherein the set of multimedia information comprises at least one piece of multimedia information; and
sending (102) the multimedia information to the first application client, so that the first application client, upon reception of the multimedia information, displays the multimedia information.

2. The method of claim 1, comprising downloading the launch strategy and the set of multimedia information by invoking an interface with a server.

3. A method for displaying multimedia information in a server, the server launching multimedia information to an application client of a terminal, **characterized in** comprising:
determining (301) multimedia information which is to be launched in a first application client based on a predefined launch strategy and a set of multimedia information, wherein the set of multimedia information comprises at least one piece of multimedia information; and
sending (302) the multimedia information to the first application client, so that the first application client, upon reception of the multimedia information, displays the multimedia information.

4. The method of any preceding claim, wherein before the step of determining multimedia information which is to be launched in a first application client based on a predefined launch strategy and a set of multimedia information, the method further comprises:
receiving a request to display multimedia information sent by the first application client which is currently running, wherein the request to display multimedia information is triggered by a predefined event occurring in the first application client.

5. The method of any preceding claim, wherein the step of determining multimedia information which is to be launched in a first application client based on a predefined launch strategy and a set of multimedia information comprises:
determining, when the launch strategy comprises a list of applications in which multimedia information should be launched, whether the list of applications comprises the first application client, and
determining, when the list of applications comprises the first application client, the multimedia information which is to be launched in the first application client based on the launch strategy and the set of multimedia information; or
obtaining, when the launch strategy comprises a launch period of time for the first application client, a current system time indicated by a clock,
determining whether the system time is in the launch period of time, and
determining, when the system time is in the launch period of time, the multimedia information which is to be launched in the first application client based on the launch strategy and the set of multimedia information; or
calculating, when the launch strategy comprises a first launch frequency, a total launch frequency based on launch frequency of each application client on a terminal, wherein the first launch frequency indicates launch frequency of the terminal, and
determining, when the total launch frequency is less than the first launch frequency, the multimedia information which is to be launched in the first application client based on the launch strategy and the set of multimedia information.

6. The method of any preceding claim, wherein the determining multimedia information which is to be launched in a first application client based on a predefined launch strategy and a set of multimedia information comprises:
obtaining, when the launch strategy comprises specified multimedia information corresponding to the first application client, the specified multimedia information from the set of multimedia information; or
obtaining, when the launch strategy comprises multiple pieces of specified multimedia information corresponding to the first application client and a second launch frequency of each piece of specified multimedia information, launch frequency for each piece of specified multimedia information corresponding to the first application client, wherein the second launch frequency indicates the launch frequency of the corresponding specified multimedia information, and
determining, when the launch frequency of the specified multimedia information is less than the corresponding second launch frequency, the specified multimedia information as the multimedia information which is to be launched in the first application client; or
obtaining a current weight of each piece of multimedia information in the set of multimedia information, wherein the weight indicates a probability of a corresponding multimedia information being selected, and
selecting the multimedia information which is to be launched in the first application client from the set of multimedia information in a descending order of the current weight of each piece of multimedia information.

7. A method for displaying multimedia information in a first application client, comprising:
sending (201) a request to display multimedia information to a launch management application client upon detection of a predefined event occuring in a first application client, and the launch management application client launches multimedia information to other application clients than the launch management application client; and
displaying (202) the multimedia information upon reception of the multimedia information sent by the launch management application client.

8. A method for displaying multimedia information in a first application client, **characterized in** comprising:
sending (401) a request to display multimedia information to a server upon detection of a predefined event, wherein the first application client corresponds to at least one predefined event, and the server launches multimedia information to an application client of a terminal; and
displaying (402) the multimedia information upon reception of the multimedia information sent by the server.

9. The method of claim 7 or 8, wherein,
for a lock screen application client, the predefined event comprises a lock screen event;
for a display application client, the predefined event comprises a pop-up window event; and
for a battery charging application client, the predefined event comprises a battery charging event under power-off state.

10. The method of claim 9, wherein the displaying the multimedia information comprises:
displaying, if the first application client is the lock screen application client, the multimedia information on a lock screen interface; or
displaying, if the first application client is the display application client, the multimedia information on display area in a current scene interface except the pop-up window; or
displaying, if the first application client is the battery charging application client, the multimedia information in a battery charging interface.

11. An apparatus for displaying multimedia information in a launch management application client, the launch management application client launching multimedia information to other application clients than the launch management application client, the apparatus **characterized in** comprising:
an information determination module (1101) configured to determine multimedia information which is to be launched in a first application client based on a predefined launch strategy and a set of multimedia information, wherein the set of multimedia information comprises at least one piece of multimedia information; and
a sending module (1102) configured to send the multimedia information to the first application client, so that the first application client, upon reception of the multimedia information, displays the multimedia information.

12. An apparatus for displaying multimedia information in a first application client, **characterized in** comprising:
a sending module (1401) configured to send a request to display multimedia information to a launch management application client upon detection of a predefined event, wherein the first application client corresponds to at least one predefined event, and the launch management application client launches multimedia information to other application clients than the launch management application client; and
a display module (1402) configured to display the multimedia information upon reception of the multimedia information sent by the launch management application client.

13. An apparatus for displaying multimedia information in a server, the server launching multimedia information to an application client of a terminal, **characterized in** comprising:
an information determination module (1601) configured to determine multimedia information which is to be launched in a first application client based on a predefined launch strategy and a set of multimedia information, wherein the set of multimedia information comprises at least one piece of multimedia information; and
a sending module (1602) configured to send the multimedia information to the first application client, so that the first application client, upon reception of the multimedia information, displays the multimedia information.

14. An apparatus for displaying multimedia information in a first application client, **characterized in** comprising:
a sending module (1801) configured to send a request to display multimedia information to a server upon detection of a predefined event, wherein the first application client corresponds to at least one predefined event, and the server launches multimedia information to an application client of a terminal; and
a display module (1802) configured to display the multimedia information upon reception of the multimedia information sent by the server.

15. An apparatus for displaying multimedia information in a launch management application client, the launch management application client launching multimedia information to other application clients than the launch management application client, the apparatus **characterized in** comprising:
a processor; and
a memory for storing processor-executable instructions, wherein
the processor is configured to:
determine multimedia information which is to be launched in a first application client based on a predefined launch strategy and a set of multimedia information, wherein the set of multimedia information comprises at least one piece of multimedia information; and
send the multimedia information to the first application client, so that the first application client, upon reception of the multimedia information, displays the multimedia information.
